(19) Europäisches Patentamt
European Patent Office
Office européen des brevets

(11) **EP 2 840 004 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(51) Int Cl.:
***B60W 30/14*** *(2006.01)*

(21) Anmeldenummer: **14000932.5**

(22) Anmeldetag: **14.03.2014**

(54) **Fahrerassistenzsystem und Betriebsverfahren für ein Fahrerassistenzsystem zur Fahrzeug-Längsregelung**

Driver assistance system and method of operation for a driver assistance system for longitudinal control of a vehicle

Système d'assistance du conducteur et procédé de fonctionnement d'un système d'assistance du conducteur pour la régulation longitudinale d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2013   DE 102013013233**

(43) Veröffentlichungstag der Anmeldung:
**25.02.2015   Patentblatt 2015/09**

(73) Patentinhaber: **MAN Truck & Bus AG**
**80995 München (DE)**

(72) Erfinder: **Gutzeit, Reinhard**
**82049 Pullach (DE)**

(74) Vertreter: **v. Bezold & Partner Patentanwälte - PartG mbB**
**Akademiestraße 7**
**80799 München (DE)**

(56) Entgegenhaltungen:
| | |
|---|---|
| **EP-A1- 2 529 993** | **EP-A2- 1 128 351** |
| **WO-A1-01/98101** | **DE-A1- 19 750 338** |
| **DE-A1-102010 028 637** | **DE-A1-102011 002 275** |
| **DE-A1-102011 118 135** | **US-A1- 2010 256 835** |

**Beschreibung**

Die Erfindung betrifft ein Fahrerassistenzsystem zur Fahrzeug-Längsregelung eines Fahrzeugs bezüglich eines Fremdfahrzeugs, vorzugsweise zur Geschwindigkeits- und/oder Abstandsregelung. Die Erfindung betrifft weiterhin ein Betriebsverfahren für ein Fahrerassistenzsystem zur Fahrzeug-Längsregelung eines Fahrzeugs.

Insbesondere Berufskraftfahrer werden seit mehreren Jahren während der Fahrt mit einer Zunahme von Informationen über den Fahrzeugzustand, die Straßen- und Umgebungsbedingungen und mit Logistikinformationen belastet. Dieser Entwicklung wurde seitens der Fahrzeughersteller durch Einführung von Fahrerassistenzsystemen zur Entlastung des Fahrzeugführers Rechnung getragen. Für den Bereich der Fahrzeug-Längsregelung sind aktiv eingreifende Regelsysteme in Serie gegangen, die sowohl in unkritischen - im Sinne einer Unfallgefahr - Fahrsituationen als auch in kritischen Fahrsituationen wirken.

Ein System zur Längsregelung bei unkritischen Situationen ist beispielsweise der Tempomat mit Beschleunigungsfunktion und Abstandshaltung mit geringer Verzögerungswirkung (max. ca. -0,3 g). Ein Notbremsassistent wirkt andererseits in kritischen Fahrsituationen zur Vermeidung eines Auffahrunfalls mit hoher Verzögerungswirkung (max. ca. -0,8 g).

Solchen aktuellen Seriensystemen mangelt es aber an ausreichender Speisung zeitaktueller Fahrzustands- und Umgebungsinformationen, um eine gleichmäßig gute Wirkung in unterschiedlichen Fahrsituationen gewährleisten zu können. Derartige Systeme sind daher in unzureichender Weise eingerichtet, die Fahrzeuglängsregelung an die im reellen Straßenverkehr auftretenden verschiedensten Verkehrs- und Fahrsituationen anzupassen. Die Abstandsregelung derartiger Systeme wird daher oftmals mit einem zusätzlichen Sicherheitspuffer versehen, der die Fahrzeuge auf einen größeren Abstand als eigentlich notwendig einregelt, um zu verhindern, dass aufgrund von unvorhergesehenen Abweichungen der Annahmen betreffend das Bremsverhalten eine Kollision auftreten kann. Dies führt jedoch zu einer ineffizienten Verkehrsraumausnutzung und zu einer mangelnden Akzeptanz derartiger Systeme, insbesondere beim Einsatz in Nutzfahrzeugen.

Ein manuelles Nachjustieren des jeweiligen Regelsystems seitens des Fahrers kann sicherheitsbedingt nur in zeitunkritischen Situationen erfolgen. Zudem kann die vom Fahrer gewählte Einstellung nicht die der aktuellen Fahrsituation angemessenste Einstellung sein, so dass ein manuelles Nachjustieren fehleranfällig ist.

Die Offenlegungsschrift DE 10 2010 028 637 A1 offenbart ein Verfahren zur elektronischen Kopplung eines ersten Kraftfahrzeugs und eines zweiten Kraftfahrzeugs, wobei zur elektronischen Kopplung Information über eine Fahrzeugeigenschaft des zweiten Fahrzeugs verwendet wird, wobei die Fahrzeugeigenschaft des zweiten Fahrzeugs Einfluss auf einen resultierenden Luftwiderstand für das erste Fahrzeug hat. Diese Information kann beispielsweise die Fläche der Rückansicht des zweiten Fahrzeugs in Fahrtrichtung angeben.

Die Offenlegungsschrift US 2010/0256835 A1 offenbart ein Verfahren zur Geschwindigkeitskontrolle eines Fahrzeugs basierend auf Kontrollnachrichten, die über eine Kommunikationseinrichtung innerhalb des Fahrzeugs empfangen werden. Diese Nachrichten enthalten ein Geschwindigkeitsprofil des Fahrzeugs und zukünftige Geschwindigkeitsbefehle.

Eine Aufgabe der Erfindung ist es, ein Fahrerassistenzsystem und ein entsprechendes Betriebsverfahren bereitzustellen, die die Fahrzeug-Längsregelung besser an unterschiedliche Verkehrs- und Fahrsituationen anpassen können, um durch eine situationsangepasste Abstandsregelung die Kollisionsgefahr mit einem Fremdfahrzeug zu reduzieren und gleichzeitig eine effiziente Verkehrsraumausnutzung zu ermöglichen.

Die vorstehend beschriebenen Aufgaben werden erfindungsgemäß gelöst durch ein Betriebsverfahren für ein Fahrerassistenzsystem zur Fahrzeug-Längsregelung nach Anspruch 1, und durch ein Fahrerassistenzsystem zur Fahrzeug-Längsregelung nach Anspruch 11. Bevorzugte Ausführungsbeispiele der Erfindung werden in den abhängigen Ansprüchen beschrieben.

Bei dem erfindungsgemäßen Betriebsverfahren für ein Fahrerassistenzsystem zur Fahrzeug-Längsregelung eines Fahrzeugs bezüglich eines Fremdfahrzeugs erfolgt die Fahrzeug-Längsregelung in Abhängigkeit von zumindest einem aus einer Fahrzeugklasse des Fremdfahrzeugs herleitbaren Parameters.

Beispielsweise kann in Abhängigkeit der bestimmten Fahrzeugklasse des Fremdfahrzeugs das spezifische Bremsverzögerungsvermögen der Fahrzeugklasse bestimmt werden. Verschiedene Fahrzeugklassen weisen in der Regel konstruktiv bedingte unterschiedliche Bremsverzögerungsvermögen auf. So haben beispielsweise Personenkraftwagen (PKWs), aber auch Motorräder, im Vergleich zu Lastkraftwagen (LKWs) oder Bussen in der Regel ein deutlich höheres Bremsverzögerungsvermögen. Durch die Bestimmung der Fahrzeugklasse des Fremdfahrzeugs kann der Sicherheitsabstand zum vorausfahrenden Fahrzeug an die vorliegende Fahrzeugklasse angepasst werden.

Die Fahrzeugklassifizierung des Fremdfahrzeugs erfolgt anhand einer Bestimmung der Silhouette des Fremdfahrzeugs, beispielsweise anhand einer rückwärtigen Silhouette des vorausfahrenden Fremdfahrzeugs oder anhand einer seitlichen Silhouette eines sich seitlich oder seitlich von hinten annähernden Fremdfahrzeugs.

Erfindungsgemäß wird ein Abstand und eine Höhe des Fremdfahrzeugs bestimmt, um die Silhouette des Fremdfahrzeugs zu bestimmen. Vorzugsweise wird zusätzlich noch die Breite des Fremdfahrzeugs ermittelt, um besser zwischen Fahrzeugklassen mit ähnlicher Höhe, aber unterschiedlicher Breite wie PKWs und Motorräder zu unterscheiden. Da verschiedene Fahrzeugklassen, wie Motorräder, Sportwagen, PKWs oder LKWs verschiedene typische Bauhöhen und/oder -breiten aufweisen, kann anhand dieser Abmaße bzw. der daraus resultierenden Fahrzeugsilhouetten die Fahrzeugklasse beispielsweise mittels Radarsensorik bestimmt werden.

Das Betriebsverfahren ist weiter eingerichtet, eine dreidimensionale Bahnkurve des Fremdfahrzeugs und/oder eine dreidimensionale Bahnkurve des eigenen Fahrzeugs zu ermitteln und die Fahrzeug-Längsregetung in Abhängigkeit der ermittelten Bahnkurven zu berechnen. Durch die Berücksichtigung der dreidimensionalen Bahnkurven sowohl des eigenen Fahrzeugs als auch des Fremdfahrzeugs können Steigungen und Gefälle und die damit verbundenen Änderungen in den Bremsverzögerungsvermögen sowohl des Fahrzeugs als auch des Fremdfahrzeugs durch den Einfluss der Hangab-/Hangauftriebskraft berücksichtigt werden.

Dies hat den Vorteil, dass die Bestimmung des erforderlichen Sicherheitsabstandes bei der Fahrzeug-Längsregelung situativ an die Paarungen der Fahrzeugklasse des Fahrzeugs und Fremdfahrzeugs angepasst werden kann.

Um die Genauigkeit der Erkennung der Fahrzeugklasse weiter zu erhöhen, kann zusätzlich noch der Einfallswinkel des Fremdfahrzeugs bestimmt werden, um die Fahrzeugklasse zu bestimmen. Der Einfallswinkel ist der Winkel zwischen der Fahrtrichtung des Fahrzeugs und dem Abstandsvektor zum Fremdfahrzeug. Der Abstandsvektor zum Fremdfahrzeug wird vorteilhafterweise von der vorderen Mitte des Fahrzeugs zum nächstliegenden Karosserieende des Fremdfahrzeugs bestimmt. Anhand des gemessenen Seitenwinkels kann eine Geometriekorrektur, z.B. der gemessenen Breite, vorgenommen werden.

Gemäß einer alternativen Ausführungsform können die Fahrzeugklasse des Fremdfahrzeugs und/ oder weitere fahrzeugspezifische Parameter des Fremdfahrzeugs, wie dessen Bremsverzögerungsvermögen, direkt mittels Fahrzeug-zu-Fahrzeug Kommunikation von diesem Fremdfahrzeug empfangen werden, so dass die Fahrzeug-Längsregelung abhängig von den empfangenen fahrzeugspezifischen Parametern des Fremdfahrzeugs erfolgt. Dies hat den Vorteil, dass derartige Parameter nicht vom Fahrzeug selbst bestimmt werden müssen, sondern unter Vermeidung etwaiger Messungenauigkeiten direkt vom Fremdfahrzeug empfangen werden können. Dies setzt allerdings voraus, dass sowohl das Fahrzeug als auch das Fremdfahrzeug zum Senden bzw. Empfangen derartiger Daten entsprechend eingerichtet sind. Alternativ könnte das Fahrzeug derartige fahrzeugspezifische Parameter des Fremdfahrzeugs auch von einer stationären Sendestation am Straßenrand empfangen.

Es ist besonders vorteilhaft, wenn zusätzlich ein aktueller fahrbahnspezifischer Parameter erfasst wird, der beispielsweise den aktuellen Zustand der Fahrbahn, auf der das Fahrzeug momentan fährt, beschreibt, insbesondere einen Zustand der Fahrbahnoberfläche oder des Fahrbahnbelags. Wenn die Längsregelung in Abhängigkeit sowohl des aktuellen fahrbahnspezifischen Parameters als auch der Fahrzeugklasse des Fremdfahrzeugs erfolgt, wird eine besonders genaue Längsregelung auf den tatsächlich erforderlichen Sicherheitsabstand ermöglicht. So umfasst das vorliegende Betriebsverfahren vorzugsweise weiter das Anpassen eines vorbekannten Parameters betreffend ein Bremsverzögerungsvermögen des eigenen Fahrzeugs in Abhängigkeit des aktuellen fahrbahnspezifischen Parameters und das Bestimmen eines Parameters betreffend ein Bremsverzögerungsvermögen des Fremdfahrzeugs in Abhängigkeit der bestimmten Fahrzeugklasse des Fremdfahrzeugs und des aktuellen fahrbahnspezifischen Parameters. Hierbei erfolgt die Fahrzeug-Längsregelung in Abhängigkeit der Parameter betreffend das Bremsverzögerungsvermögen des Fahrzeugs und des Fremdfahrzeugs. Der Begriff "aktuell" bedeutet, dass die Parameterwerte beim Betrieb des Fahrzeugs, beispielsweise während der Fahrt, quasi in Echtzeit bestimmt und fortlaufend aktualisiert werden.

Ein besonders vorteilhafter fahrbahnspezifischer Parameter ist der Fahrbahnreibwert, da Unterschiede im Fahrbahnreibwert einen hohen Einfluss auf das Bremsverzögerungsvermögen sowohl des Fahrzeugs als auch des Fremdfahrzeugs haben und somit den erforderlichen Sicherheitsabstand maßgeblich beeinflussen.

Des Weiteren kann eine vorgegebene Anzahl von Fahrbahnzustandskiassen und/oder Fahrbahnreibwertklassen vorgesehen sein, wobei wenigstens eine dieser Klassen anhand des aktuell bestimmten fahrbahnspezifischen Parameters ausgewählt und zur Fahrzeug-Längsregelung berücksichtigt wird.

Bei ungünstigen Fahrbahnreibwerten, insbesondere bei Niederschlag, werden vor allem die vergleichsweise hohen Bremsverzögerungsvermögen von Sportwagen oder Motorrädern fahrbahnreibwertbedingt sehr stark nivelliert, so dass sich teilweise sogar eine Verschlechterung im Vergleich zur Masse aller Fahrzeuge einstellen kann. Dies resultiert beispielsweise aus dem Aufschwimmen extrem breiter Reifen mangels zügiger Wasserverdrängung aus dem Reifenprofil. Bei solchen Fahrbahnzuständen kann ein schwerer LKW ein vergleichbares oder gar ein besseres Bremsverhalten als ein Sportwagen aufweisen, so dass der Sicherheitsabstand eines LKWs zu einem vorausfahrenden Motorrad zu Gunsten der Verkehrsraumnutzung gefahrlos im Vergleich zu einer trockenen Asphaltfahrbahn verkürzt werden kann. Mit anderen Worten variiert der tatsächlich erforderliche Sicherheitsabstand stark in Abhängigkeit der jeweiligen Fahrzeugklassen des eigenen Fahrzeugs und des Fremdfahrzeugs unter Berücksichtigung des aktuellen Fahrbahnzustands, was mit der vorliegenden Erfindung entsprechend bei der Längsregelung berücksichtigt werden kann.

Die bestimmte 3-dimensionale Bahnkurve des Fremdfahrzeugs wird verwendet, die Genauigkeit der Silhouetten-Erkennung zu verbessern, um dadurch eine genauere Klassifizierung des Fremdfahrzeugs zu ermöglichen. Bei Steigungs-/ Gefällefahrten aber auch Kurvenfahrten werden Breite und Höhe der projizierten Silhouette der Fahrzeuge verzerrt. Gleichermaßen entsprechen linear gemessene Abstände nicht den tatsächlichen Bogenmassen. Vorzugsweise wird daher in Abhängigkeit der ermittelten 3-dimensionalen Bahnkurve des Fremdfahrzeugs eine sich verändernde Breite und/oder Höhe der Silhouette des Fremdfahrzeugs so korrigiert, dass die Silhouette ohne geometrische Verzerrung ausgewertet und typisiert, d.h. klassifiziert werden kann, um die Silhouette ohne Verzerrungseffekte einer Fahrzeugklasse zuzuordnen. Beispielsweise kann aus der 3-dimensionalen Bahnkurve die resultierende vertikale oder horizontalen Neigung des Fremdfahrzeugs abgeleitet werden und die damit verbundene sich verändernde Breite und/oder Höhe der Silhouette des Fremdfahrzeugs, die vom eigenen Fahrzeug erfasst werden kann. Auf Basis dieser erfassten Anteile kann die Fahrzeugsilhouette geometrisch rekonstruiert werden, um diese anschließend einer bestimmten Fahrzeugklasse zuzuordnen. Für ein vorausfahrendes Fremdfahrzeug kann auf diese Weise die Hecksilhouette rekonstruiert werden. Die korrigierte Silhouette entspricht der Hecksilhouette, die ein in der Ebene gerade vorausfahrendes Fremdfahrzeug erzeugen würde. Für ein sich seitlich oder seitlich von hinten annähernden Fremdfahrzeugs kann auf diese Weise die seitliche Silhouette rekonstruiert werden.

Die 3-dimensionale Bahnkurve des vorausfahrenden Fremdfahrzeugs kann anhand des ermittelten Abstands zum Fremdfahrzeug und anhand Navigations-/Straßenkartendaten, die den 3-dimensionalen Verlauf der aktuelle Fahrbahn beschreiben, ermittelt werden. Die 3-dimensionale Bahnkurve des vorausfahrenden Fremdfahrzeugs kann auch in Abhängigkeit einer sich verändernden Breite und/oder Höhe der Hecksilhouette des Fremdfahrzeugs ermittelt werden. Vorzugsweise wird die 3-dimensionale Bahnkurve des vorausfahrenden Fremdfahrzeugs auch in Abhängigkeit einer seitlichen Silhouette und Fahrzeuglänge ermittelt. Je nach Stärke der Fahrbahnkrümmung nach rechts oder links kann ein unterschiedlich großer Anteil der seitlichen und hinteren Fahrzeugsilhouette erfasst werden.

Zusätzlich oder alternativ können der Straßentyp und/oder der dreidimensionale Verlauf der Bahnkurve der Straße ermittelt werden und in die Längsregelung einfließen.

Das erfindungsgemäße Fahrerassistenzsystem zur Fahrzeug-Längsregelung eines Fahrzeugs bezüglich eines Fremdfahrzeugs umfasst insbesondere eine Bereitstellungseinrichtung, die zum Bestimmen einer Fahrzeugklasse eines vorausfahrenden Fremdfahrzeugs ausgeführt ist, und eine Reglereinheit, die zur Durchführung des Betriebsverfahrens, wie oben beschrieben, eingerichtet ist. Die zuvor beschriebenen Aspekte des Betriebsverfahrens gelten somit auch für das Fahrerassistenzsystem.

Bevorzugte Ausführungsformen der vorliegenden Erfindung werden im Folgenden beispielsweise und exemplarisch unter Bezugnahme auf die beigefügten Zeichnungen näher beschrieben.

Fig. 1          zeigt ein Blockdiagramm und illustriert beispielhaft die ermittelten Daten und berechneten Funktionsgrößen eines Fahrerassistenzsystems gemäß einem Ausführungsbeispiel;

Fig. 2          zeigt eine Tabelle mit typischen Bremsverzögerungsvermögen in Abhängigkeit von verschiedenen fahrbahn- und fahrzeugspezifischen Parametern gemäß einem Ausführungsbeispiel;

Fig. 3          illustriert den Abstand und Einfallswinkel zwischen Fahrzeug und Fremdfahrzeug sowie die Erkennung der Fahrzeugklasse gemäß einem Ausführungsbeispiel;

Fig. 4          zeigt ein Ablaufdiagramm zur Illustration eines Regelungsablaufs für eine typische Fahrsituation gemäß einem Ausführungsbeispiel;

Fig. 5A und 5B    illustrieren schematisch die Erkennung des Straßenverlaufs anhand der Veränderung der Fahrzeugsilhouetten gemäß einem Ausführungsbeispiel;

Fig. 6          zeigt ein Ablaufdiagramm zur Illustration eines Regelungsablaufs für eine weitere Fahrsituation gemäß einem Ausführungsbeispiel;

Fig. 7A          illustriert schematisch die im Ablaufdiagramm von Fig. 6 beschriebene Fahrsituation;

Fig. 7B          illustriert schematisch eine Reaktionsphase, die dem Fahrer im Ablaufdiagramm gemäß Fig. 6 eingeräumt wird;

Fig. 8          zeigt ein Ablaufdiagramm zur Illustration eines Regelungsablaufs für eine weitere Fahrsituation gemäß einem Ausführungsbeispiel; und

Fig. 9          illustriert schematisch die Fahrsituation gemäß dem Ablaufdiagramm aus Fig. 8.

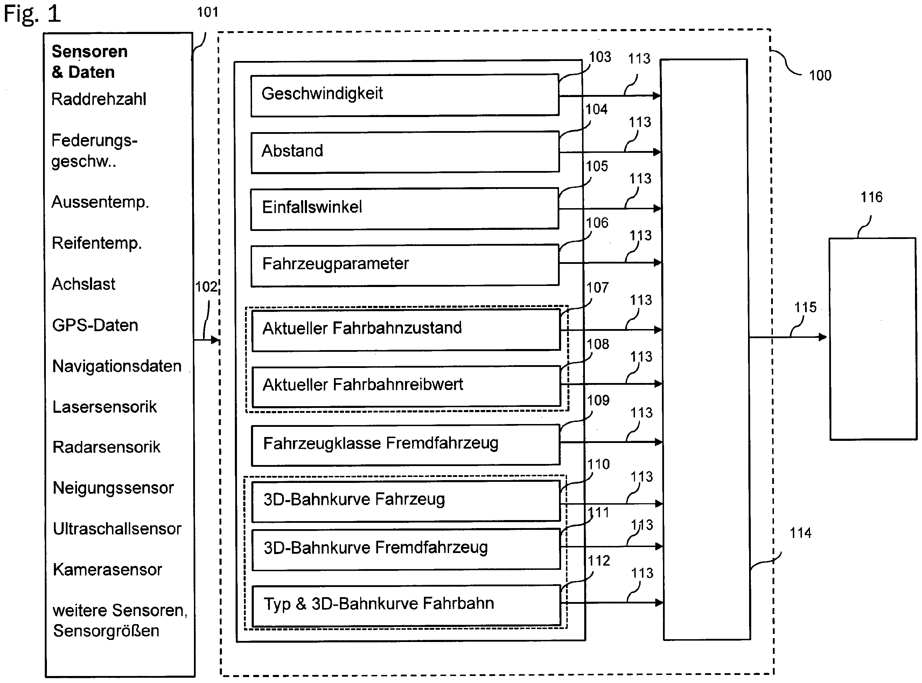

Das Blockdiagramm der Fig. 1 illustriert die verwendeten Sensoren und Daten 101 und die damit ermittelten Funktionsgrößen 103 bis 112, die in die Abstandsregelung einfließen können. Die verwendeten Sensoren und Daten 101 umfassen die aktuelle Raddrehzahl, Federungsgeschwindigkeit, Außentemperatur, Reifentemperatur und Achslast. Die verwendeten Sensoren und Daten 101 umfassen weiterhin GPS-Daten, Navigationsdaten oder Daten, die mittels Lasersensorik, Radarsensorik, einem Neigungssensor, Ultraschallsensor, einem Kamerasensor oder weiterer Sensorgrößen ermittelt werden, beispielsweise zur Ermittlung der Fahrzeugklasse des Fremdfahrzeugs 2. Bei den zuvor genannten Daten und Sensoren 101 handelt es sich um aus dem Stand der Fahrzeugtechnik bekannte Messgrößen und Sensoren.

Diese erfassten Daten 101 werden über eine Datenverbindung 102 an ein Fahrerassistenzsystem zur Fahrzeug-Längsregelung 100 übermittelt. Mittels der übermittelten Daten 101 werden mehrere Funktionsgrößen bzw. fahrbahn- und fahrzeugspezifische Parameter 103 bis 112 ermittelt, die in die Abstandsregelung einer Reglereinheit 114 einfließen.

Eine aus dem Stand der Technik bekannte Funktionsgröße zur Längsregelung ist die eigene Fahrgeschwindigkeit 103 des Fahrzeugs. Diese kann über die Raddrehzahl und/oder mittels GPS-Daten ermittelt werden.

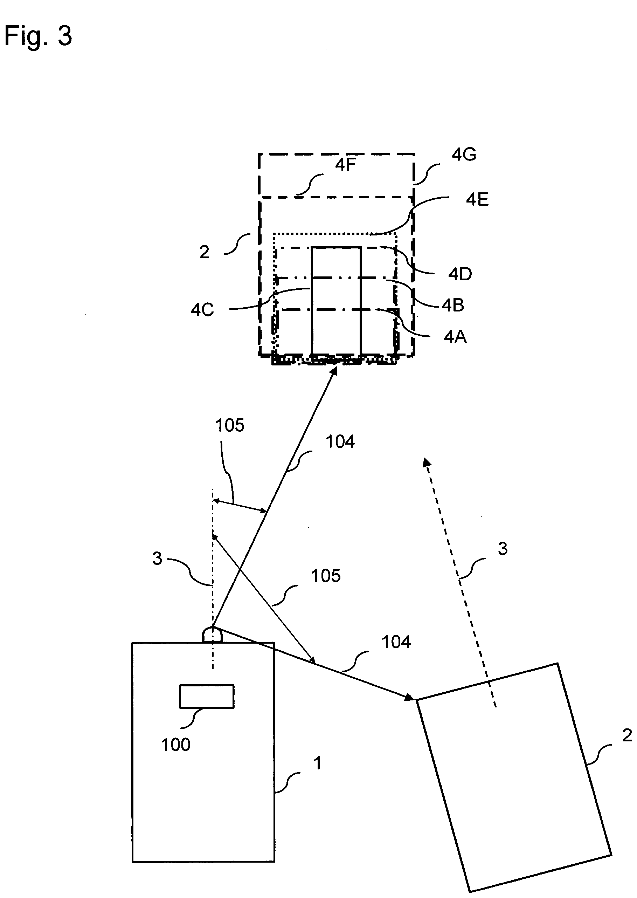

Der zeitaktuell gemessene kürzeste Abstand 104 zum Fremdfahrzeug 2 und dessen Veränderung kann beispielsweise mittels Radarsignalen ermittelt werden, die am Fremdfahrzeug 2 reflektiert werden. Aus der eigenen Fahrgeschwindigkeit 103 und dem zeitlichen Verlauf des gemessenen Abstands zum Fremdfahrzeug 2 kann die Fahrgeschwindigkeit 103 des Fremdfahrzeugs 2 sowie ein zeitaktuelles Brems- bzw. Beschleunigungsverhalten des Fremdfahrzeugs 2 und des Fahrzeugs 1 ermittelt werden. Der kürzeste Abstand ist in Fig. 3 als Länge des Pfeils 104 dargestellt. Bei einem gerade oder leicht seitlich versetzt vorausfahrenden Fremdfahrzeug 2 (oberes Fahrzeug in Fig. 3) entspricht der Abstand im Wesentlichen der Entfernung von der Frontsilhouette des Fahrzeugs 1 zur Mitte der Hecksilhouette des Fremdfahrzeugs 2. Bei einem sich seitlich von hinten annähernden Fremdfahrzeug 2 (unteres Fahrzeug in Fig. 3) wird der kürzeste Abstand im Wesentlichen von dem dem Fahrzeug 1 zugewandten, vorderen seitlichen Karosserieabschnitt des Fremdfahrzeugs 2 bestimmt.

Falls die Fahrtrichtung zwischen eigenem Fahrzeug 1 und Fremdfahrzeug 2 nicht identisch ist, ist der Einfallswinkel 105 zwischen Fahrzeug 1 und Fremdfahrzeug 2 eine für die Längsregelung wichtige Größe, insbesondere bei seitlicher Annäherung oder Einschervorgängen von Fremdfahrzeugen 2. Wie in Fig. 3 illustriert, ist der Einfallswinkel 105 der Winkel zwischen Fahrtrichtung 3 des Fahrzeugs 1 und dem Abstandsvektor 104 zum Fremdfahrzeug 2 und kann beispielsweise mittels eines Radarsensors 6A ermittelt werden. Ein gerade vorausfahrendes Fremdfahrzeug 2 hat daher einen Einfallswinkel von ca. 0°, ein seitlich nebenher fahrendes Fremdfahrzeug 2 von ca. 90°, ein seitlich rechts versetzt und vorausfahrendes Fremdfahrzeug 2 einen Einfallswinkel zw. 0 und 90° und ein sich seitlich rechts versetzt und von hinten annäherndes Fremdfahrzeug 2 zwischen 90° und 180° Grad. Der Einfallswinkel 105 und der gemessene kürzeste Abstand 104 bzw. deren zeitlicher Verlauf bestimmen maßgeblich die Gefährlichkeit und das Kollisionsrisiko des zeitlichen Ablaufs der Verkehrssituation.

Eine weitere Funktionsgröße, die in die Fahrzeug-Längsregelung eingeht, ist die Fahrzeugklasse 109 des Fremdfahrzeugs 2. Verschiedene Fahrzeugklassen 109 weisen in der Regel unterschiedliche Bremsverzögerungsvermögen auf. Durch die Bestimmung der Fahrzeugklasse 109 des Fremdfahrzeugs 2 kann der Sicherheitsabstand zum vorausfahrenden Fahrzeug 2 an die vorliegende Fahrzeugklasse 109 angepasst werden. So haben beispielsweise PKWs, aber auch Motorräder, im Vergleich zu LKWs oder Bussen in der Regel ein deutlich höheres Bremsverzögerungsvermögen.

Fig. 3 illustriert schematisch, wie die Klasse 109 des vorausfahrenden Fahrzeugs 2 anhand der Fahrzeugsilhouette bestimmt wird. Fig. 3 zeigt verschiedene mögliche Abmaße von Hecksilhouetten 4A bis 4G eines vorausfahrenden Fremdfahrzeugs 2. Die mit 4A bezeichnete Silhouette entspricht aufgrund der niedrigen Höhe einem Sportwagen, die Silhouette 4B mit vergleichbarer Breite, aber größerer Höhe einem PKW. Die Silhouette 4C mit schmaler Breite entspricht einem Motorrad; die Silhouette 4D mit ähnlicher Breite wie Sportwagen und PKW, aber größerer Höhe, entspricht einem SUV. Die Silhouette 4E entspricht einem Transporter, die Silhouette 4F einem kleinen LKW oder Stadtbus, während die größte Silhouette 4G einem LKW oder Reisebus entspricht.

Im Längsregler ist eine vorgegebene Anzahl von Fahrzeugklassen 109 hinterlegt. Mittels einer Radar- oder Kamerasensorik wird Höhe und Breite des Fremdfahrzeugs 2 bestimmt und damit die Fahrzeugklasse 109 des Fremdfahrzeugs 2 aus der vorgegebenen Anzahl von Fahrzeugklassen 109 bestimmt. Durch die Berechnung und Beachtung der 3-dimensionalen Bahnkurve und durch Berücksichtigung des Einfallswinkels 113 kann eine zusätzliche Geometriekorrektur sowohl der erfassten Breite und Höhe der rückwärtigen Fahrzeugsilhouette, als auch der Länge und Höhe der seitlichen Silhouette, beispielsweise bei Kurvenfahrt erfolgen. Dies wird erforderlich insbesondere dann, wenn die Längen-, Höhen und/oder Breitenanteile des Fremdfahrzeugs 2 vom Sensor nicht ausreichend differenziert werden können.

Wie in Fig. 1 weiter gezeigt, werden weiterhin verschiedene Fahrzeugparameter 106 des eigenen Fahrzeugs 1 ermittelt, die für die Bestimmung des aktuellen Bremsverzögerungsvermögens des Fahrzeugs 1 verwendet werden können.

Beispielsweise kann der Fahrzeugtyp erfasst werden. Dem eigenen Fahrzeugtyp und der technischen Fahrzeugausführung liegt ein konstruktiv bedingtes Abbrems- (und Beschleunigungs-)vermögen zugrunde. Dieses bildet die Basis für weitere Berechnungen zur Längs-Regelung für die jeweilig vorliegende Fahrsituation. Der Fahrzeugtyp bzw.

die technische Fahrzeugausführung ist typischerweise bereits im Fahrerassistenzsystem 100 voreingestellt, so dass dieser nicht neu bzw. laufend ermittelt werden muss.

Weitere mögliche aktuelle Fahrzeugparameter 106 basieren auf der aktuellen Beladung des Fahrzeugs 1 oder geben an, ob ein Anhänger angekoppelt ist. Der Beladungszustand kann als das aktuelle Gewicht des Fahrzeugs 1, als das aktuelle Gewicht eines Anhängers und/oder als das aktuelle Gewicht einer Beladung ermittelt werden. Das Gesamtgewicht verteilt sich auf die Achsen und kann mit deren Einfederungshöhe anhand der Federkennlinie der Federbeine errechnet werden.

Weitere aktuelle Fahrzeugparameter 106 beschreiben den Zustand der Reifen, und umfassen mehrere reifenspezifische Parameter des eigenen Fahrzeugs 1, wie den Reifenzustand und den Reifentyp mit definierten bzw. festgelegten Reifenklassen, z.B. Sommer-, Winter-, Ganzjahres- oder Off-Road-Reifen. Der Reifenzustand kann als Profiltiefe, beispielsweise in Prozent vom Neuzustand, erfasst werden. Dies gilt auch für den Fall eines nachgeschnittenen Reifens. Eine Verschleißzustandserkennung des Reifens ist aus der Differenz der aus dem Abrollumfang errechneten Fahrzeuggeschwindigkeit und der über GPS erfassten Geschwindigkeit möglich, so dass der Verschleißzustand der Reifen automatisch ermittelt wird und nicht manuell eingegeben werden muss.

Weitere mögliche aktuelle Fahrzeugparameter 106 spezifizieren den Zustand der Bremsanlage, beispielsweise basierend auf dem aktuellen Wartungszustand oder dem aktuellen Belastungszustand der Bremsanlage 116. Letzterer, insbesondere die situative und zeitaktuelle Erhitzung derart anfälliger Bremsanlagen 116, kann durch örtliche Temperatur- und Verschleißsensoren erkannt und entsprechend bei der Fahrzeug-Längsregelung berücksichtigt werden.

Eine weitere Klasse von Funktionsgrößen, die in die Fahrzeug-Längsregelung einfließen, betreffen Parameter, die die aktuelle Fahrbahn 5 beschreiben. So wird ein aktueller Fahrbahnzustand 107 ermittelt. Der Fahrbahnzustand 107 kann aus der unmittelbaren Erfassung von Fahrbahnparametern, wie Rauheit der Oberfläche, Welligkeit der Fahrbahn 5, Oberflächentemperatur an der Fahrbahn 5, etc. ermittelt werden, beispielsweise abgeleitet aus der Arbeit bzw. Bewegung der Feder- und Dämpfungselemente zur Stabilisierung der gefederten Fahrwerks- und Aufbaumassen des Fahrzeugs 1.

Zudem können zur genaueren Beurteilung von Höhenunterschieden des Querprofils der Fahrbahn 5 Ultraschallsensoren eingesetzt werden. Mittels entsprechender Sensordaten kann der Zustand der Fahrbahn 5 klassifiziert werden, beispielsweise mittels einer dreistufigen Klassifizierung der Fahrbahn 5 in "gut", "mittel" und "schlecht". Der ermittelte Fahrbahnzustand kann dann bei der Ermittlung des Bremsverzögerungsvermögens des eigenen Fahrzeugs 1 und des Fremdfahrzeugs 2 beispielsweise über einen Korrekturfaktor oder durch Verwendung entsprechender experimentell bestimmter Versuchsdaten berücksichtigt werden.

Ein weiterer Fahrbahnparameter ist der aktuelle Fahrbahnreibwert 108. Dieser resultiert einerseits aus der Fahrbahnoberfläche und andererseits aus dem Witterungseinfluss. Beide Einflussfaktoren können mit Radarsensoren, Kamera-Systemen (auch Infrarot) oder Laser-Scanner in logischer Verknüpfung mit einer Fahrbahnstrukturerkennung zur Durchführung von Bildvergleichen basierend auf einer Fahrbahndatenbank, und/oder Daten zur Helligkeit, Echoauswertung (Stärke und Streuung einer akustischen Reflexion) und der Außentemperatur gewonnen werden.

Die Datenauswertung führt zu einer Reibwerterkennung mit definierten bzw. festgelegten Reibwertklassen. Abhängig vom Reibwert $\mu F$ der Fahrbahnen 5 werden beispielsweise folgende Fahrbahnreibwertklassen gebildet werden: $\mu F\_1 > 0{,}8$; $\mu F\_2 > 0{,}5$ bis $0{,}8$; $\mu F\_3 = 0{,}2$ bis $0{,}5$; $\mu F\_4 < 0{,}2$.

Bezüglich weiterer Details zur Bestimmung von Reifenverschleiß, Fahrbahnzustand und Fahrbahnreibwert wird auf die Druckschrift DE 10 2011 108 110 A1 verwiesen.

Ferner wird die Bahnkurve 110 des eigenen Fahrzeugs 1 in allen drei Ebenen bestimmt. Die zurückgelegte und die bis zum vorausfahrenden Fahrzeug 2 projizierte Bahnkurve 110 des eigenen Fahrzeugs 1 werden zu exakten Einschätzungen der Fahrsituation und des Abstandes zum vorausfahrenden Fahrzeug 2 berechnet. Die Bahnkurve 110 kann beispielsweise mittels Radar 6, eines Neigungssensors und/oder GPS-Daten ermittelt werden.

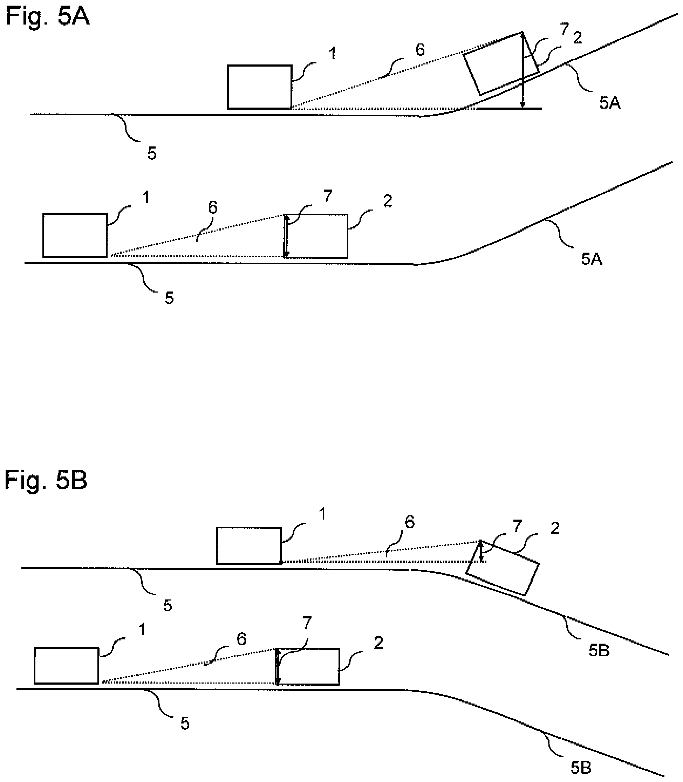

Weiterhin, soweit von der eigenen Fahrzeugsensorik ermittelbar, wird auch die Bahnkurve 111 des vorausfahrenden Fahrzeugs 2 berechnet. Dies kann beispielsweise mittels Radar 6 oder Lasersensorik erfolgen. So kann beispielsweise eine Kurvenfahrt aus dem Abstand zum vorausfahrenden Fremdfahrzeug 2 und der sich veränderten Breite der Hecksilhouette des Fremdfahrzeugs 2, die mittels Radar- oder Laserdaten erfasst wird, ermittelt werden. Dies ist ebenso für Fahrten bei Steigung oder Gefälle möglich. Dafür wird die Höhenveränderung der Hecksilhouette des vorausfahrenden Fremdfahrzeugs 2 bestimmt, was nachfolgend anhand der Fig. 5A und 5B erläutert wird. Statt die Bahnkurve 111 des Fremdfahrzeugs 2 selbst zu ermitteln, können diese Daten auch mittels Datenübertragung vom Fremdfahrzeug 2 oder von einer stationären Sendestation (nicht gezeigt) empfangen werden.

Ferner können der Straßentyp und die Bahnkurve 112 der Straßen in drei Ebenen als Funktionsgröße ermittelt werden. Dies kann anhand von folgenden Teilschritten erfolgen: Zuerst kann aus (zeitaktuellen) Navigationsdaten der aktuelle Straßentyp 112 bestimmt werden. Der aktuelle Straßentyp 112 kann folgende Werte umfassen: Bundesautobahn, Schnellstraße, Bundesstraße, Landesstraße, Nebenstraße, Stadtstraße - mehrspurig, Stadtstraße - einspurig, Hauptstraße, Nebenstraße, gegebenenfalls Baustelle. Nachfolgend wird die Anzahl der Fahrspuren in Fahrtrichtung unter Berücksichtigung des ermittelten Straßentyps 112 und/oder aus einem Bildvergleich mit Bildern aus einer Straßentyp-Datenbank ermittelt. Nachfolgend kann auf Basis des ermittelten Straßentyps 112 und der Anzahl der Fahrspuren die Fahrbahnbreite berechnet werden. So kann zur Ermittlung des rechten und gegebenenfalls linken Fahrbandrandes mittels Bildanalyse bestimmt werden, ob Fahrbahnmarkierungen vorhanden sind und/ oder durch Abtastung (beispielsweise mittels Ultraschallsensorik) der Untergrund erfasst werden.

Auf Basis des ermittelten Straßentyps 112, der Anzahl der Fahrspuren und der berechneten Fahrbahnbreite erfolgt dann eine Voraus-Abtastung der Fahrbahn 5, beispielsweise mittels Radar 6 oder Laser. Eine Vorausermittlung der Fahrbahnsteigung 5A kann dann durch Längenänderung des Abtaststrahls erfolgen. Ein Gefälle 5B der Straße kann dann aus der Erfassung bzw. Sensierung der Horizontverschiebung durch Bildvergleich unter Berücksichtigung des Fahrzeug-Nickens bzw. der Fahrzeug-Lage erfolgen. Wird ein Gefälle 5B erkannt, erfolgt eine zeitnahe Sensierung des Gefällegrades durch zumindest einen der folgenden Schritte: Sensierung der Achslastverschiebung (Einfederweg), Abnahme der Motorzugleistung (Zugkraftdiagramm), Veränderung der Länge des Fahrbahn-Abtaststrahls, Veränderung der Höhe (über NN) über einen längeren Sekundenzeitraum, oder Veränderung der GPS-Position. Mittels dieser berechneten Daten erfolgt dann eine Vorausberechnung der Bahnkurve 112 der Straße.

Die beschriebenen Funktionsgrößen 103 bis 112 werden über eine Datenverbindung 113 an eine Reglereinheit 114 des Fahrerassistenzsystems zur Fahrzeug-Längsregelung übertragen.

Auf Basis dieser Funktionsgrößen 103 bis 112 ermittelt die Reglereinheit 114 das aktuelle Bremsverzögerungsvermögen des Fahrzeugs 1 bzw. des Fremdfahrzeugs 2 anhand hinterlegter Reglertabellen 200. Auf Basis dieser Bremsverzögerungsvermögen wird dann der aktuell erforderliche Sicherheitsabstand wie in bekannten Längsregelungssystemen bestimmt. Ist eine Anpassung des Sicherheitsabstandes notwendig, steuert der Längsregler 114 durch ein Ausgangssignal 115 beispielsweise die Bremssteuerung 116 des Fahrzeugs 1.

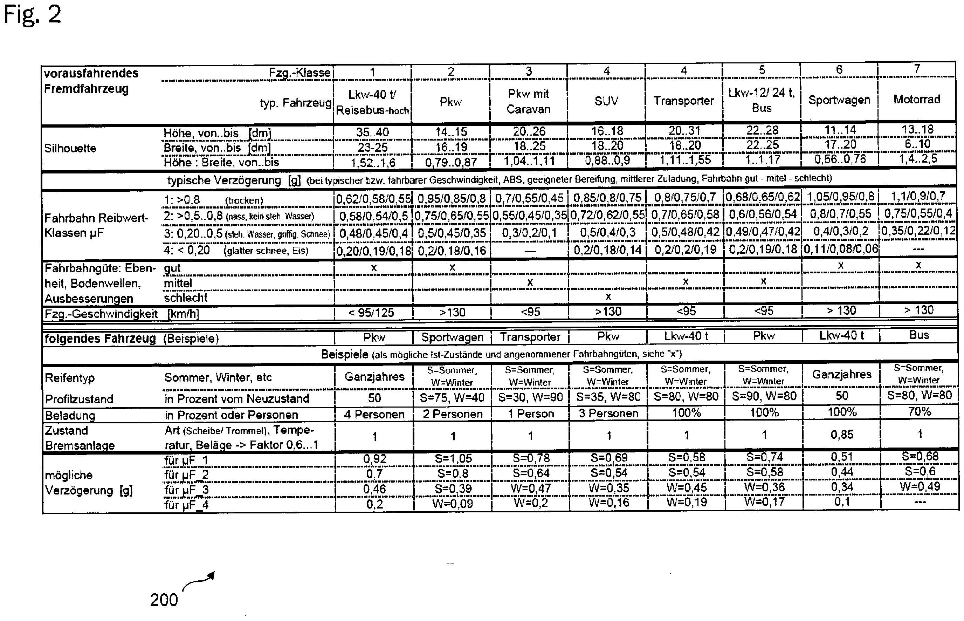

Im Fahrzeugregler 114 sind verschiedene Regelungstabellen 200 hinterlegt, mittels derer anhand der bestimmten Funktionsgrößen jeweils das aktuelle Bremsverzögerungsvermögen des Fahrzeugs 1 und des Fremdfahrzeugs 2 ermittelt wird, um auf dieser Basis einen aktuellen Sicherheitsabstand zu berechnen. Dies ist anhand von Fig. 2 näher erläutert.

Die in Fig. 2 gezeigte Tabelle 200 listet Werte für typische Bremsverzögerungsvermögen des Fremdfahrzeugs 2 in Abhängigkeit der bestimmten Fahrzeugklasse 109 auf. Für jede Fahrzeugklasse 109 werden verschiedene Bremsverzögerungsvermögen in Abhängigkeit von verschiedenen fahrbahn- und fahrzeugspezifischen Parametern aufgeführt. Des Weiteren gibt Tabelle 200 Werte typische Bremsverzögerungsvermögen des eigenen Fahrzeugs 1 in Abhängigkeit von verschiedenen fahrbahn- und fahrzeugspezifischen Parametern an.

Gemäß dem in Fig. 2 beschriebenen Ausführungsbeispiel wird für die Bestimmung des Bremsverzögerungsvermögens eines vorausfahrenden Fremdfahrzeugs 2 zwischen sieben verschiedenen Fahrzeugklassen 109 des Fremdfahrzeugs 2 unterschieden, die in der zweiten Zeile der Tabelle 200 aufgelistet sind. So fallen beispielsweise in eine erste Klasse LKWs bis 40 t bzw. hochgebaute Reisebusse. In der dritten Zeile sind die für die jeweilige Fahrzeugklasse 109 typischen Abmaße der Höhe und Breite der rückwärtigen Fahrzeugsilhouette aufgelistet. So liegt die typische Höhe derartiger LKWs und Reisebusse zwischen 35 und 40 Dezimeter und die Breite im Bereich von 23 bis 25 Dezimeter. In vergleichbarer Weise sind für die Fahrzeugklassen 2 bis 7 die Höhen- und Breitenabmaße von PKWs mit Caravan, SUVs, Transporter, LKW von 12 bis 24 t und Bussen, Sportwagen sowie Motorrädern ausgelistet.

In der Tabelle 200 sind für verschiedene Fahrzeugklassen 109 typische Bremsverzögerungsvermögen aufgeführt, unter Annahme einer typischen Fahrgeschwindigkeit des Fremdfahrzeugs 2, Ausstattung mit ABS, geeigneter Bereifung und mittlerer Zuladung. Es wird hierbei insbesondere zwischen drei Fahrbahnzustandsklassen 107 "gut", "mittel" und "schlecht" unterschieden. Weiterhin wird zwischen vier verschiedenen Fahrbahnreibwertklassen $\mu F$ 108 unterschieden, die die unterschiedlichen Reibwertverhältnisse auf trockenen Straßen, nassen Straßen ohne stehendes Wasser, nassen Straßen mit stehendem Wasser bzw. mit griffigem Schnee oder Straßen mit glattem Schnee bzw. Eis berücksichtigen.

Jede Zeile in dem Feld "Fahrbahn-Reibwert-Klassen $\mu F$" der Tabelle 200 gibt das Bremsverzögerungsvermögen für eine der Reibwertklassen 1 bis 4 für die jeweilige Fahrzeugklasse 109 des Fremdfahrzeugs 1 bis 7; 2 an, wobei die Werte in jedem Tabellenfeld nochmals nach den Fahrbahnzuständen gut/mittel/schlecht unterschieden werden.

Durch die Bestimmung des aktuellen Fahrbahnzustands 107 und des aktuellen Fahrbahnreibwertes 108, wie im Zusammenhang mit Fig. 1 beschrieben, kann somit das aktuell zutreffende Bremsverzögerungsvermögen des vorausfahrenden Fremdfahrzeugs 2 ermittelt werden.

Wurde beispielsweise das vorausfahrende Fremdfahrzeug 2 als PKW der Fahrzeugklasse "2" erkannt, der aktuelle Fahrbahnzustand 107 als "gut" ermittelt und der aktuelle Fahrbahnreibwert $\mu F$ 108 mit einem Wert > 0,8 (Fahrbahnreibwertklasse "1"), so entnimmt man aus dem zugehörigen Feld der Tabelle 200 den Wert 0,95 g für das Bremsverzögerungsvermögen des vorausfahrenden PKWs. Bei einem schlechten Fahrbahnzustand 107 (Fahrbahnzustandsklasse "schlecht"), wäre der Wert 0,8 g.

Bei schlechtem Fahrbahnzustand 107 und einer Fahrbahnreibwertklasse "3" würde sich das Bremsverzögerungsvermögen auf 0,35 g reduzieren. Handelt es sich bei diesen Straßenverhältnissen bei dem vorausfahrenden Fremdfahrzeug 2 dagegen um einen Transporter (Fahrzeugklasse 4), wäre das entsprechende Bremsverzögerungsvermögen 0,42 g.

Die Tabelle 200 verdeutlicht, dass die der Abstandsregelung zugrunde liegenden Bremsverzögerungsvermögen eine hohe Abhängigkeit von der Fahrzeugklasse 109 des Fremdfahrzeugs 2 aufweist. Durch die fortwährende Bestimmung der Fahrzeugklasse des Fremdfahrzeugs 2 kann somit die Abstandsregelung an die aktuelle Verkehrslage, d.h. an in der Nähe des Fahrzeugs 1 fahrenden unterschiedlichen Fahrzeugklassen 109 angepasst werden, so dass die Bestimmung des erforderlichen Sicherheitsabstandes bei der Fahrzeug-Längsregelung situativ an die Paarungen der Fahrzeugklasse 109 des Fahrzeugs 1 und Fremdfahrzeugs 2 angepasst werden kann.

Wird optional noch zusätzlich der aktuelle Fahrbahnzustand 107 und/oder der aktuelle Fahrbahnreibwert 108 berücksichtigt, die sich während einer Fahrt laufend ändern können, kann die Genauigkeit des bestimmten Bremsverzögerungsvermögens noch signifikant erhöht werden.

So weist ein Motorrad (Fahrzeugklasse 7, vgl. letzte Spalte in Tabelle 200) bei guten Fahrbahnzuständen 107 und einer aktuellen Fahrbahnreibklasse 108 von "1" (trockene Fahrbahn) ein im Vergleich zu einem schweren LKW der Fahrzeugklasse "1" besseres Bremsverzögerungsvermögen von 1,1 g im Vergleich zu 0,62 g für den LKW auf. Dagegen verschlechtert sich das Bremsverzögerungsvermögen des Motorrads bei schlechten Fahrbahnzuständen 107 und einer aktuellen Fahrbahnreibklasse 108 von "3" (stehendes Wasser oder griffiger Schnee) auf 0,12 g. Die des schweren LkWs verschlechtert sich dagegen nur auf 0,4 g, so dass das Bremsverzögerungsvermögen des LKWs bei diesen Straßenverhältnissen größer als das des Motorrads ist. Die gleichzeitige Berücksichtigung der aktuellen Fahrbahnparameter und der jeweiligen Fahrzeugklasse 109 des Fremdfahrzeugs 2 ermöglicht somit eine wesentlich genauere Abstandsregelung, die sich an die aktuelle Fahrumgebung anpassen kann.

Fig. 2 illustriert weiterhin die Abhängigkeit des Bremsverzögerungsvermögens des eigenen Fahrzeugs 1 in Abhängigkeit von fahrzeugspezifischen Parametern 106 und von fahrbahnspezifischen Parametern, wobei wiederum zwischen den verschiedenen Fahrzeugklassen 1 bis 7 unterschieden wird. Fig. 2 zeigt lediglich ausschnittsweise beispielhafte Werte für einzelne Parameterkombinationen.

Die Spalte "1" gibt exemplarisch für einen PKW mit den in Klammern angegebenen Werten für die fahrzeugspezifischen Parameter Fahrzeugklasse (PKW), angenommener Reifentyp (Ganzjahresreifen), Reifenzustand (Profilzustand von 50% vom Neuzustand), Beladungszustand (4 Personen), Zustand Bremsanlage (Faktor 1) das Bremsverzögerungsvermögen an. Hierbei sind nur Werte für einen angenommenen Fahrbahnzustand 107 mit dem Wert "gut" dargestellt, was durch die Auswahl "x" in der Zeile Fahrbahngüte ersichtlich ist. Für diese Parameter geben nun die unteren vier Zeilen des Felds "mögliche Verzögerung" das Bremsverzögerungsvermögen des Fahrzeug für die vier verschiedenen Fahrbahnreibwert-Klassen 108 an.

Analog sind beispielsweise in Spalte "3" bzw. "Transporter" die jeweiligen Bremsverzögerungsvermögen für einen Transporter als vorausfahrendes Fremdfahrzeug 2 bei "mittlerer" Fahrbahngüte, Beladung mit einer Person und Bremsanlagenfaktor "1" angegeben, wobei die Werte für das Bremsverzögerungsvermögen getrennt für Sommer- und Winterreifen angegebenen sind (gekennzeichnet durch "S" und "W").

Ferner ist der Tabelle 200 zu entnehmen, dass im Falle eines PKWs, der zu 100 % beladen ist, dessen Zustand der Bremsanlage mit einem Faktor "1" bewertet wurde und der mit Sommerreifen versehen ist, deren Profilzustand 90 % vom Neuzustand entspricht, das aktuelle Bremsverzögerungsvermögen für eine trockene Fahrbahn der Klasse "1" den Wert 0,74 aufweist.

Es wird darauf hingewiesen, dass Fig. 2 nur beispielhaft und ausschnittsweise die im Speicher des Fahrerassistenzsystems 100 hinterlegten Bremsverzögerungsvermögen für ein Fremdfahrzeug 2 und das eigene Fahrzeug 1 für die verschiedenen Wertbereiche der ermittelten Funktionsgrößen 103 bis 112 darstellt.

So ist in Fig. 2 nicht gezeigt, dass auch die dreidimensionalen Bahnkurven und Straßenverläufe zusätzlich in Form weiterer Tabellen oder eines Korrekturfaktors berücksichtigt werden können. Aus den Bahnkurven kann die Differenz der Steigungen der Fahrbahn 5A des Fahrzeugs 1 und Fremdfahrzeugs 2 ermittelt werden, woraus ein Korrekturfaktor aufgrund der zusätzlichen Hangtriebkraft abgeleitet werden kann, um den Wert für das Bremsverzögerungsvermögen von Fahrzeug 1 und Fremdfahrzeug 2 an die Fahrbahnsteigung 5A anzupassen.

Anhand der so bestimmten Bremsverzögerungsvermögen des eigenen Fahrzeugs 1 und des Fremdfahrzeugs 2 kann unter Berücksichtigung der aktuellen Fahrgeschwindigkeit und des Einfallswinkels 105 des Fremdfahrzeugs 2 ein genauer Sicherheitsabstand berechnet werden, auf den das Fahrerassistenzsystem 100 dann einregelt.

Der Einfluss der verschiedenen Funktionsgrößen 103 bis 112 auf das Bremsverzögerungsvermögen kann mittels Versuchsreihen für verschiedene Fahrzeugklassen 109 ermittelt werden. So wirkt sich beispielsweise eine Verschlechterung des Fahrbahnzustands 107 oder des Fahrbahnreibwerts 109 negativ auf das Bremsverzögerungsvermögen der Fahrzeuge 1, 2 aus.

Die ermittelten Bremsverzögerungswerte für verschiedene Kombinationen aus fahrbahn- und fahrzeugspezifischen Parametern 103 bis 112 werden dann als Regelungstabellen im Fahrzeug 1 hinterlegt, auf die die Reglereinheit 114 zugreift.

Die folgenden Figuren erläutern beispielhaft die Fahrzeug-Längsregelung für einige typische Fahrsituationen.

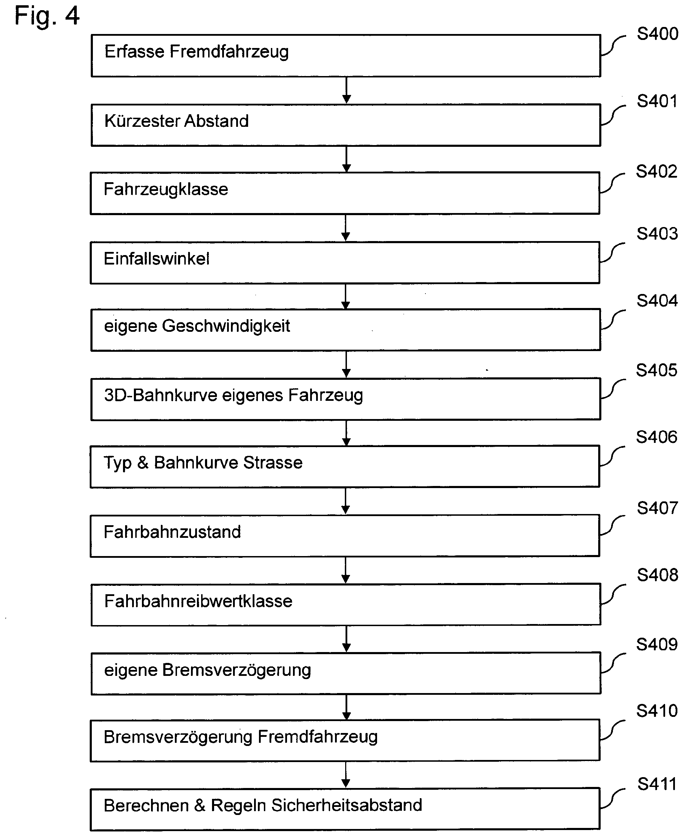

In Fig. 4 ist der Regelungsablauf für eine Fahrsituation beschrieben, bei der ein LKW-Sattelzug 1 einem Sportwagen 2 folgt (siehe auch Fig. 5). Die Fahrzeuge 1, 2 fahren auf einer Bundesautobahn bei trockenem Asphalt und Tageslicht. Die Fahrgeschwindigkeit des Sportwagens 2 beträgt 80 km/h, da der Fahrer einen Tausch-Motor einfährt, während der Sattelzug 1 mit einem zulässigen Gesamtgewicht von 40 t sich langsam mit 85 km/h dem vorausfahrenden Fahrzeug 2 annähert.

In einem Schritt S400 wird das vorausfahrende Fremdfahrzeug 2 (der Sportwagen) vom Radar 6 erfasst. Im nächsten Schritt S401 wird der Abstand 104 zwischen dem Sattelzug 1 und dem Sportwagen 2 ermittelt. Anschließend wird im Schritt S402 die Fahrzeugklasse 109 des vorausfahrenden Fahrzeugs 2 anhand des Abstandes 104, der Breite und Höhe des Objekts ermittelt. Die Breite und Höhe des Objekts wird mittels Radarreflexion an der rückseitigen Silhouette des vorausfahrenden Fahrzeugs 2 erfasst. Im vorliegenden Beispiel wird die Silhouette 4A erkannt und somit als Sportwagen 2 identifiziert.

Nachfolgend wird im Schritt S403 der Einfallswinkel 105 zum vorausfahrenden Sportwagen 2 aufgrund Abstand 104 und Fahrzeugbreite bestimmt. Im vorliegenden Ausführungsbeispiel ist der Einfallswinkel <5°, somit fährt das vorausfahrende Fahrzeug 2 in der gleichen Fahrspur. Im Schritt S404 wird die eigene Fahrgeschwindigkeit 103 abgefragt und anschließend im Schritt S405 die eigene dreidimensionale Bahnkurve 110 berechnet. Im angenommenen Beispiel findet eine Geradeausfahrt in der Ebene statt.

In Schritt S406 werden der aktuelle Straßentyp und die Bahnkurve 112 der Straße berechnet. Im vorliegenden Beispiel liegt eine Bundesautobahn und ein gerader Straßenverlauf vor. Anschließend wird im Schritt S407, wie zuvor erläutert, der Fahrbahnzustand berechnet. Im vorliegenden Beispiel liegt eine ebene gute Fahrbahn 5 vor. Im Schritt S408 wird die Fahrbahnreibwertklasse bestimmt: die Fahrbahnreibwertklasse $\mu F\_1 > 0{,}8$. Anhand dieser Daten wird aus den abgelegten Kennwerttabellen im Schritt S409 das eigene aktuelle Bremsverzögerungsvermögen ermittelt, was aufgrund der aktuellen Funktionsgrößen einem Wert von 0,62 g entspricht. Anschließend wird im Schritt S410 das Bremsverzögerungsvermögen für das Fremdfahrzeug 2 bestimmt, was aufgrund der vorliegenden Funktionsgrößen einem Wert von 1,05 g entspricht. Anhand der ermittelten Bremsverzögerungsvermögen wird anschließend im Schritt S411 der Sicherheitsabstand für die Fahrzeug-Längsregelung für eine Geschwindigkeit von 80 km/h des vorausfahrenden Fahrzeugs 2 berechnet.

Für die Berechnung der Sicherheitsabstände und für Vergleichszwecke werden weiterhin die fahrzeugtypische Schwelldauer der Bremsanlage 116 bis zum Anliegen der Bremsbeläge und bis zum weiteren Anstieg des Bremsdrucks bis zum Erreichen des Radblockierdrucks (Beginn der Antiblockierregelung) berücksichtigt. Typische Richtwerte für die Fahrzeugklassen PKW und Motorrad bzw. LKW bzw. Sattelzug sind 0,2 bzw. 0,3 bzw. 0,7 Sekunden. Weiterhin ist die Umsetzdauer des Fahrers vom Gas auf Bremspedal bzw. Griff zu berücksichtigen, wobei ein beispielhafter Richtwert bei 0,2 Sekunden liegt. Dies ist aber nicht reglerrelevant. Ein Richtwert des Sicherheitsabstands zum vorausfahrenden Fahrzeug 2 als Zeitlücke kann dann typischerweise $t_{Sich} = 1{,}8$ Sekunden betragen, ist aber auch nicht reglerrelevant sondern dient nur für Vergleichsrechnungen. Jedoch ist noch die Berechnungs- bzw. Zykluszeit des Reglers 114 zu berücksichtigen, die mit 400 ms angenommen wird.

Bei einem LKW-Sattelzug mit 40 t beträgt die Bremsenschwelldauer 0,7 s, zuzüglich der Berechnungszeit des Reglers 114 von 0,4 s ergibt sich somit eine Gesamtansprechdauer $t_{Break}$ für den Regler von 1,1 s. Aus der Formel

$$t_{Sich} = t_{BReak} + \frac{v_1}{2*a_1} - \frac{v_2^2}{2*a_2*v_1} \qquad (1)$$

$t_{RBreak}$ = Gesamtansprechdauer Fahrerassistenzsystem 100 und Bremse 116
$a_1$ = Mindestverzögerung Folgefahrzeug 2
$a_2$ = Verzögerung vorausfahrendes Fremdfahrzeug 2
$v_1$ = Geschwindigkeit 103 Folgefahrzeug 2
$v_2$ = Geschwindigkeit vorausfahrendes Fremdfahrzeug 2

errechnet sich der Sicherheitsabstand von 41 m entsprechend einer Zeitlücke $t_{Sich} = 1{,}85$ s. Das Fahrerassistenzsystem 100 regelt daraufhin die Folgefahrt auf dem errechneten Sicherheitsabstand bei gleichen Geschwindigkeiten ein.

Fig. 5A illustriert, wie die Bahnkurve 111 des vorausfahrenden Fahrzeugs 2 anhand der sich verändernden Hecksilhouette des Fahrzeugs 2 ermittelt werden kann. Die Hecksilhouette des vorausfahrenden Fremdfahrzeugs 2 wird vom Fahrzeug 1 mittels eines Radarstrahls 6 erfasst. Die erfasste Höhe 7 der Hecksilhouette des Fremdfahrzeugs 2 verändert sich in Abhängigkeit von Steigung 5A und Gefälle 5B der Fahrbahn 5.

Beispielsweise wird die erfasste Höhe der Hecksilhouette 7 im Vergleich zu der Situation, wo sich beide Fahrzeuge 1, 2 in einer Ebene befinden, bei Einfahrt des vorausfahrenden Fremdfahrzeugs 2 in eine Steigung scheinbar größer, so dass die steigende Bahnkurve 111 des vorausfahrenden Fremdfahrzeugs 2 vom Folgefahrzeug 1 durch die sich vergrößernde Hecksilhouette erfasst werden kann. In ähnlicher Weise wird die erfassbare Höhe der Hecksilhouette 7 des vorausfahrenden Fremdfahrzeugs 2 kleiner, wenn das vorausfahrende Fremdfahrzeug 2 in ein Gefälle einfährt.

Dies ist in Fig. 5B illustriert. In vergleichbarer Weise (nicht gezeigt) können Rechts- oder Linkskurven 111 der Fahrbahn des vorausfahrenden Fremdfahrzeugs 2 durch die sich verändernde Breite der Hecksilhouette des Fremdfahrzeugs 2 erfasst werden.

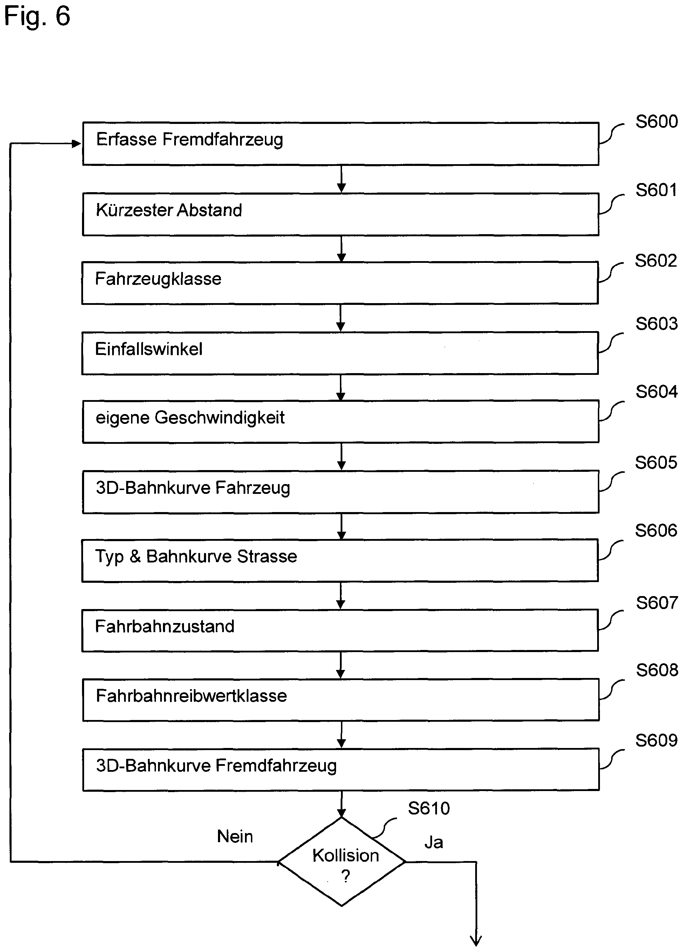

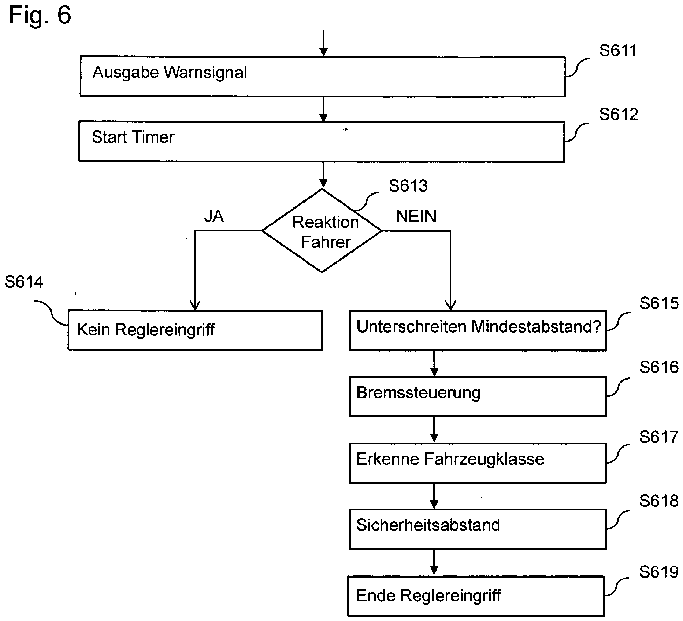

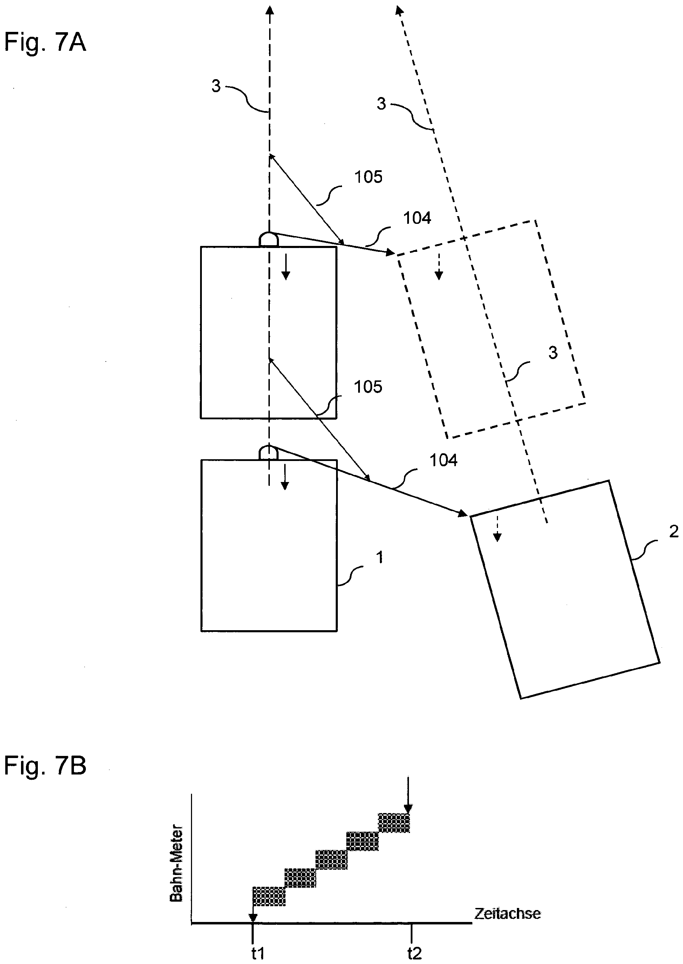

Fig. 6 illustriert den Regelungsablauf für eine weitere typische Fahrsituation. In diesem Beispiel fährt ein LKW 1 auf der rechten Spur einer Bundesautobahn mit einer Geschwindigkeit von 75 km/h bei starkem Regen und schlechter Sicht. Ein Fremdfahrzeug 2 in Form eines LKWs nähert sich von hinten rechts, wie in Fig. 7A illustriert, zum Einfädeln mit 85 km/h und gerät somit in den Radar-Einfallswinkel von LKW 1.

In Schritt S600 wird das sich von hinten seitlich nähernde Fremdfahrzeug 2 vom Radar 6 erfasst. In Schritt S601 wird der kürzeste Abstand 104 zum Fremdfahrzeug 2 gemessen. Daraufhin wird in Schritt S602 die Fahrzeugklasse 109 des sich nähernden Fahrzeugs 2 aufgrund des Abstands und der Höhe bestimmt und als LKW oder Bus identifiziert. Im Schritt S603 wird der Einfallswinkel 105 aufgrund des Abstands 104 von der linken vorderen Fahrzeugbegrenzung ermittelt, der im vorliegenden Beispiel einen Wert von 150° aufweist. Anschließend wird im Schritt S604 die eigene Fahrgeschwindigkeit 103 erfasst, die in der Regel ständig bekannt vorliegt. Im Schritt S605 wird die eigene dreidimensionale Bahnkurve 110 berechnet, die im folgenden Beispiel einer Geradeausfahrt in der Ebene entspricht. Anschließend werden in Schritt S606 der Straßentyp und die Bahnkurve 112 der Straße berechnet. Gemäß der angenommenen Fahrsituation wird der Straßentyp 112 als Bundesautobahn ermittelt. Anschließend wird im Schritt S607 der Fahrbahnzustand 107 berechnet, wobei gemäß der angenommenen Fahrsituation eine gute Fahrbahn 5 mit ebenem Verlauf vorliegt.

Anschließend wird in Schritt S608 die Fahrbahnreibwertklasse 108 bestimmt, vorliegend $\mu F\_2$ mit Werten von 0,5 bis 0,8. Im folgenden Schritt S609 wird die dreidimensionale Bahnkurve 111 des LKWs 2 berechnet. Im Schritt S610 wird in Abhängigkeit der ermittelten Bahnkurven 110, 111 bestimmt, ob eine Zeitdauer oder ein Abstand bis zu einer möglichen seitlichen Kollision zwischen Fahrzeug 1 und dem sich seitlich nähernden Fremdfahrzeug 2 einen vorbestimmten Schwellwert unterschritten hat. Falls NEIN, besteht keine unmittelbare Kollisionsgefahr und der Regelungsablauf geht zurück zu Schritt S600, um die Gefahrensituation weiter zu beobachten. Falls jedoch eine Zeitdauer oder ein Abstand bis zu einer möglichen seitlichen Kollision zwischen dem eigenen Fahrzeug 1 und dem Fremdfahrzeug 2 einen vorbestimmten Schwellwert unterschritten hat, d.h. eine Kollision bevorstehen könnte, wird ein Warnsignal in Schritt S611 ausgegeben. Im vorliegenden Beispiel wurde die Gefahr einer seitlichen Kollision oder des Schneidens in 3 bis 4 Sekunden ermittelt und somit in Schritt S611 eine akustische Warnung aus dem Lautsprecher an den Fahrer ausgegeben.

Nachfolgend wird im Schritt S613 bestimmt, ob der Fahrer während einer vorbestimmten Reaktionsphase einen Lenk- und/oder Bremsvorgang oder eine Geschwindigkeitsänderung oder Änderung des Fahrpedals ausführt. Hierfür kann dem Fahrer beispielsweise mittels eines Timers eine Reaktionszeit von 2 Sekunden eingeräumt werden, um dem Fahrer selbst die Möglichkeit zu geben, lenkend auszuweichen oder abzubremsen. Derartige Gefahrensituationen können durch eine Querregelung des Fahrers in der Regel am besten gelöst werden, so dass vor Eingriff der Längsregelung vorteilhafterweise dem Fahrer eine Reaktionszeit eingeräumt wird. Fig. 7B illustriert die dem Fahrer in Schritt S612 eingeräumte Reaktionsphase zwischen dem Zeitpunkt t1 und t2. Die Länge der Reaktionsphase kann in Abhängigkeit von der bestimmten Zeitdauer des bestimmten Abstands bis zu einer möglichen seitlichen Kollision bestimmt werden.

Wird eine diesbezügliche Reaktion des Fahrers in Schritt S613 erkannt, erfolgt kein Reglereingriff S614. Die Fahrzeug-Längsregelung bleibt aber grundsätzlich in Betrieb, um die Verkehrssituation weiter zu erfassen. Falls der Fahrer innerhalb der vorbestimmten Reaktionszeit nicht reagiert und im Schritt S615 erkannt wird, dass ein vorbestimmter Sicherheits-Mindestabstand unterschritten wird, speist die Fahrzeug-Längsregelung den maximalen Bremsdruck in Schritt S616 ein, zusätzlich wird die ABS-Regelung gestartet, da der Reibwert bei 0,55 liegt.

Im Schritt S617 wird aufgrund der nahen Silhouette des sich seitlich annähernden Fremdfahrzeugs 2 das Fremdfahrzeug 2 als LKW erkannt und klassifiziert. In Schritt S618 erfolgt die Abbremsung solange, bis der Sicherheitsabstand zum klassifizierten LKW 2 erreicht ist. Nach Erreichen des erforderlichen Sicherheitsabstandes folgt in Schritt S619 ein Ende der Längsregelung, da die unmittelbare seitliche Kollisionsgefahr nicht mehr besteht und der Sicherheitsabstand erreicht ist.

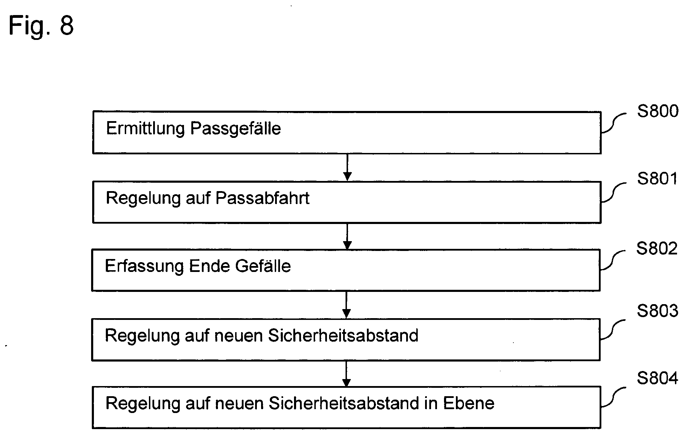

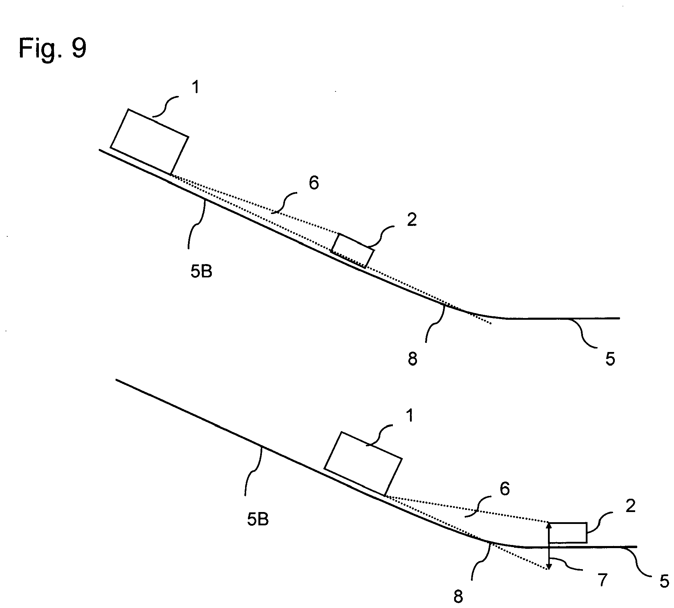

Fig. 8 und 9 illustrieren die Längsregelung für eine weitere typische Fahrsituation. Wie in Fig. 9 dargestellt, folgt im vorliegenden Beispiel ein LKW-Fahrzeug 1 einem vorausfahrenden PKW-Fremdfahrzeug 2 entlang einer Fahrbahn 5 auf einem Abschnitt 5B mit Gefälle. Im vorliegenden Beispiel fährt der LKW 1 mit einer Geschwindigkeit von 50 km/h bei Schneefall und einer schneebedeckten Fahrbahn und schlechter Sicht. Wie im unteren Bild auf Fig. 9 dargestellt, fährt der vorausfahrende PKW 2 anschließend in eine Ebene ein. Aufgrund der Einfahrt des vorausfahrenden PKWs 2 in eine Ebene verbessert sich dessen Bremsverzögerungsvermögen durch Wegfall der Hangabtriebskraft, so dass der Sicherheitsabstand vom nachfolgenden LKW 1, der sich noch auf dem Gefälle befindet, zu diesem PKW 2 vergrößert werden muss.

Im Schritt S800 wird das Passgefälle der aktuellen Fahrbahn 5 ermittelt. Das Passgefälle wurde aus den dreidimensionalen Straßenbahnkurven 112 und/ oder aus den dreidimensionalen Bahnkurven 110, 111 des Fahrzeugs 1 bzw. des Fremdfahrzeugs 2 ermittelt. Im Schritt S801 wird der aktuelle Sicherheitsabstand auf Passabfahrt geregelt unter Berücksichtigung der Bremsverzögerungsvermögen des Fahrzeugs 1 und des Fremdfahrzeugs 2, die wie zuvor anhand der verschiedenen Funktionsgrößen 103 bis 112 ermittelt wurden. In Schritt S802 wird ein Ende des Gefälles durch Horizontverschiebung und Objektveränderung erkannt. Die Hecksilhouette und die sichtbarer Fahrzeugfront ergeben aus Sicht des LKWs 1 eine größere Objekthöhe 7.

In Schritt S803 bremst die Fahrzeug-Längsregelung den LKW 1 so lange ab, bis der Abstand zum vorausfahrenden PKW 2 entsprechend dem verlängerten Bremsweg aufgrund der bekannten Hangabtriebskraft angepasst ist. In Schritt S804 erfolgt eine Neuanpassung des Sicherheitsabstandes nach dem Einfahren des LKWs 1 in die Ebene.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorhandener Fahrzeugsensorik auch in anderen Kombinationen eingesetzt werden. Dies trifft insbesondere auf die Kombinationen der in Fig. 1 dargestellten Funktionsgrößen zu, die unterschiedlich kombiniert werden können. So kann beispielsweise das Bremsverzögerungsvermögen des Fremdfahrzeugs nur in Abhängigkeit der Fahrzeugklasse des Fremdfahrzeugs bestimmt werden. Zur Verbesserung der Genauigkeit und zur besseren Anpassung an verschiedene Fahrsituationen können jedoch optional eine oder mehrere aktuelle fahrbahnspezifische Parameter bei der Berechnung des Bremsverzögerungsvermögens des Fahrzeugs als auch des Fremdfahrzeugs verwendet werden. Gleiches gilt für die fahrzeugspezifischen Parameter.

Ferner ist es vorteilhaft, aber nicht unbedingt notwendig, weitere Parameter wie die Bestimmung der Bahnkurven der Fahrzeuge, etc. zu berechnen. Je nach gewählter Ausführungsform werden dann für die ermittelten Funktionsgrößen im Fahrerassistenzsystem 100 die entsprechenden angepassten Regelungstabellen hinterlegt. Ferner können selbstverständlich nach Bedarf und erforderlicher Genauigkeit die Anzahl der verwendeten Klassen für die einzelnen Parameter, wie Fahrzeugklasse, Fahrbahnzustandsklasse, Fahrbahnreibwertklasse etc. angepasst werden.

**Bezugszeichenliste**

| | |
|---|---|
| 1 | Fahrzeug |
| 2 | Fremdfahrzeug |
| 3 | Fahrtrichtung |
| 4A | Sportwagensilhouette |
| 4B | PKW-Silhouette |
| 4C | Motorrad-Silhouette |
| 4D | SUV-Silhouette |
| 4F | kleiner LKW- oder Stadtbus-Silhouette |
| 4G | LKW- oder Reisebus-Silhouette |
| 5 | Fahrbahn |
| 5A | Fahrbahn mit Steigung |
| 5B | Fahrbahn mit Gefälle |
| 6 | Radarstrahl |
| 6A | Radarsensor |
| 7 | Höhe Hecksilhouette |
| 100 | Fahrerassistenzsystem zur Fahrzeug-Längsregelung |
| 101 | Sensoren und Daten |
| 102 | Datenverbindung |
| 103 | Geschwindigkeit |
| 104 | kürzester Abstand zum Fremdfahrzeug |
| 105 | Einfallswinkel |
| 106 | Fahrzeugparameter |
| 107 | aktueller Fahrbahnzustand |
| 108 | aktueller Fahrbahnreibwert |
| 109 | Fahrzeugklasse Fremdfahrzeug |
| 110 | 3D-Bahnkurve Fahrzeug |
| 111 | 3D-Bahnkurve Fremdfahrzeug |
| 112 | Straßentyp und 3D-Bahnkurve Fahrbahn |
| 113 | Datenleitung |
| 114 | Reglereinheit |
| 115 | Steuerleitung |
| 116 | Bremsanlage |

200 Tabelle mit fahrbahnspezifischen und fahrzeugspezifischen Bremsverzögerungsvermögen

**Patentansprüche**

1. Betriebsverfahren für ein Fahrerassistenzsystem (100) zur Fahrzeug-Längsregelung eines Fahrzeugs (1) bezüglich eines Fremdfahrzeugs (2), vorzugsweise zur Geschwindigkeits- und/oder Abstandsregelung, wobei die Fahrzeug-Längsregelung in Abhängigkeit von zumindest einem aus einer Fahrzeugklasse (109) des Fremdfahrzeugs (2) herleitbaren Parameter erfolgt, wobei eine vorgegebene Anzahl von Fahrzeugklassen vorgesehen ist und wenigstens eine dieser Klassen in Abhängigkeit von einem erfassten Abstand (104), einer Höhe und einer Breite des Fremdfahrzeugs (2) bestimmt wird und zur Fahrzeug-Längsregelung berücksichtigt wird, **gekennzeichnet durch** die Schritte:

   Ermitteln einer 3-dimensionalen Bahnkurve (111) des Fremdfahrzeugs (2) in Abhängigkeit von einem gemessenen Abstand (104) und einem sich verändernden Einfallswinkel (105) des Fremdfahrzeugs (2), wobei der Einfallswinkel der Winkel zwischen der Fahrtrichtung des Fahrzeugs und einem Abstandsvektor zum Fremdfahrzeug ist, und
   Korrigieren einer sich verändernden Breite und/oder Höhe der Silhouette (4A-4G) des Fremdfahrzeugs (2) in Abhängigkeit von der ermittelten 3-dimensionalen Bahnkurve (111) des Fremdfahrzeugs (2), so dass die Silhouette zur Bestimmung der Fahrzeugklasse ohne geometrische Verzerrung ausgewertet und typisiert werden kann.

2. Betriebsverfahren nach Anspruch 1, umfassend den Schritt: Bestimmen einer Silhouette (4A-4G) des Fremdfahrzeugs (2), anhand derer die Klassifizierung des Fremdfahrzeugs (2) erfolgt.

3. Betriebsverfahren nach Anspruch 1, weiter umfassend die Schritte:

   Empfangen, von dem Fremdfahrzeug (2) oder von einer stationären Sendeeinheit, von fahrzeugspezifischen Parametern betreffend das Bremsverzögerungsvermögen des Fremdfahrzeugs (2); und
   Durchführen der Fahrzeug-Längsregelung in Abhängigkeit der empfangenen fremdfahrzeugspezifischen Parametern.

4. Betriebsverfahren nach einem der vorhergehenden Ansprüche, weiter umfassend die Schritte:

   Erfassen eines aktuellen fahrbahnspezifischen Parameters (107, 108);
   Anpassen eines vorbekannten Parameters betreffend ein Bremsverzögerungsvermögen des Fahrzeugs (2) in Abhängigkeit des aktuellen fahrbahnspezifischen Parameters (107, 108);
   Bestimmen eines Parameters betreffend ein Bremsverzögerungsvermögen des Fremdfahrzeugs (108) in Abhängigkeit der bestimmten Fahrzeugklasse (109) des Fremdfahrzeugs (2) und des aktuellen fahrbahnspezifischen Parameters (107, 108), wobei die Fahrzeug-Längsregelung in Abhängigkeit der Parameter betreffend das Bremsverzögerungsvermögen des Fahrzeugs (1) und des Fremdfahrzeugs (2) erfolgt.

5. Betriebsverfahren nach einem der vorhergehenden Ansprüche, weiter umfassend:

   Ermitteln einer 3-dimensionalen Bahnkurve (110) des Fahrzeugs (1),
   wobei die Fahrzeug-Längsregelung in Abhängigkeit der ermittelten Bahnkurven (110, 111) erfolgt.

6. Betriebsverfahren nach Anspruch 1, wobei die 3-dimensionale Bahnkurve (111) des vorausfahrenden Fremdfahrzeugs (2) in Abhängigkeit einer sich verändernden Breite und/oder Höhe der Hecksilhouette (4A-4G) des Fremdfahrzeugs (2) ermittelt wird.

7. Betriebsverfahren nach Anspruch 6, wobei die 3-dimensionale Bahnkurve (111) des vorausfahrenden Fremdfahrzeugs (2) in Abhängigkeit einer seitlichen Silhouette und Fahrzeuglänge ermittelt wird.

8. Betriebsverfahren nach einem der vorhergehenden Ansprüche, wobei ein Straßentyp und eine 3-dimensionale Bahnkurve (112) der Straße ermittelt wird und in die Fahrzeuglängsregelung einfließt.

9. Betriebsverfahren nach einem der vorhergehenden Ansprüche, weiter umfassend die Schritte: Bestimmen zumindest eines Fahrbahnzustandes (107), eines Fahrbahnreibwertes (108), eines reifenspezifischen Parameters des Fahrzeugs (1) und/oder eines fahrzeugspezifischen Parameters (106), wobei zumindest einer dieser Parameter in die Längsregelung einfließt.

10. Betriebsverfahren nach einem der vorhergehenden Ansprüche, weiter umfassend die Schritte: Bestimmen zumindest eines Fahrzeugbeladungszustands, einen Zustands der Fahrzeugbremsanlage und/oder eines Reifenzustands des Fahrzeugs (1), wobei zumindest einer dieser Parameter in die Längsregelung einfließt.

11. Fahrerassistenzsystem (100) zur Fahrzeug-Längsregelung eines Fahrzeugs (1) bezüglich eines Fremdfahrzeugs (2), vorzugsweise zur Geschwindigkeits- und/oder Abstandsregelung, insbesondere zur Durchführung des Betriebsverfahrens nach einem der vorhergehenden Ansprüche, wobei das Fahrerassistenzsystem (100) Folgendes umfasst:

- eine Bereitstellungseinrichtung (109), die zum Bestimmen einer Fahrzeugklasse eines vorausfahrenden Fremdfahrzeugs ausgeführt ist, wobei eine vorgegebene Anzahl von Fahrzeugklassen vorgesehen ist und wenigstens eine dieser Klassen in Abhängigkeit von einem erfassten Abstand (104), einer Höhe und einer Breite des Fremdfahrzeugs (2) bestimmt wird und zur Fahrzeug-Längsregelung berücksichtigt wird; und
- zumindest eine Regelungseinrichtung (114), die zum Durchführen der Fahrzeug-Längsregelung in Abhängigkeit von zumindest einem aus der Fahrzeugklasse herleitbaren Parameter ausgeführt ist,

**dadurch gekennzeichnet, dass** die Bereitstellungseinrichtung (109) eingerichtet ist,

eine 3-dimensionale Bahnkurve (111) des Fremdfahrzeugs (2) in Abhängigkeit von einem gemessenen Abstand (104) und einem sich verändernden Einfallswinkel (105) des Fremdfahrzeugs (2) zu ermitteln, wobei der Einfallswinkel der Winkel zwischen der Fahrtrichtung des Fahrzeugs und einem Abstandsvektor zum Fremdfahrzeug ist, und
eine sich verändernde Breite und/oder Höhe der Silhouette (4A-4G) des Fremdfahrzeugs (2) in Abhängigkeit von der ermittelten 3-dimensionalen Bahnkurve (111) des Fremdfahrzeugs (2) zu korrigieren, so dass die Silhouette zur Bestimmung der Fahrzeugklasse ohne geometrische Verzerrung ausgewertet und typisiert werden kann.

12. Nutzfahrzeug, vorzugsweise Lastwagen oder Omnibus, mit einem Fahrerassistenzsystem (100) nach Anspruch 11.

**Claims**

1. Operating method for a driver assistance system (100) for the longitudinal control of a vehicle (1) with respect to another vehicle (2), preferably for the control of the velocity and/or inter-vehicle distance, wherein the longitudinal control of the vehicle is carried out as a function of at least one parameter which can be derived from a vehicle class (109) of the other vehicle (2), wherein a predefined number of vehicle classes is provided, and at least one of these classes is determined as a function of a detected distance (104), a height and a width of the other vehicle (2) and is taken into account for the longitudinal control of the vehicle, **characterized by** the steps:

determining a 3-dimensional trajectory (111) of the other vehicle (2) as a function of a measured distance (104) and a changing angle of incidence (105) of the other vehicle (2), wherein the angle of incidence is the angle between the direction of travel of the vehicle (1) and a distance vector relating to the other vehicle (2), and correcting a changing width and/or height of an outline (4A-4G) of the other vehicle (2) as a function of the determined 3-dimensional trajectory (111) of the other vehicle (2), so that the outline (4A-4G) can be evaluated without geometric distortion and its type identified in order to determine the vehicle class.

2. Operating method according to Claim 1, comprising the step of: determining the outline (4A-4G) of the other vehicle (2) on the basis of which the other vehicle (2) is classified.

3. Operating method according to Claim 1, also comprising the steps of:

receiving vehicle-specific parameters relating to the braking deceleration capability of the other vehicle (2) from the other vehicle (2) or from a stationary transmitter unit; and
carrying out the vehicle longitudinal control as a function of the received parameters which are specific to the other vehicle.

4. Operating method according to one of the preceding claims, also comprising the steps of:

   detecting a current parameter (107, 108) which is specific to the underlying surface;
   adapting a previously known parameter relating to a braking deceleration capability of the vehicle (2) as a function of the current parameter (107, 108) which is specific to the underlying surface;
   determining a parameter relating to a braking deceleration capability of the other vehicle (108) as a function of the determined vehicle class (109) of the other vehicle (2) and the current parameter (107, 108) which is specific to the underlying surface, wherein the longitudinal control of the vehicle is carried out as a function of the parameters relating to the braking deceleration capability of the vehicle (1) and of the other vehicle (2).

5. Operating method according to one of the preceding claims, also comprising:
   determining a 3-dimensional trajectory (110) of the vehicle (1), wherein the vehicle longitudinal control is carried out as a function of the determined trajectories (110, 111).

6. Operating method according to Claim 1, wherein the 3-dimensional trajectory (111) of the other vehicle (2) which is travelling ahead is determined as a function of a changing width and/or height of the rear outline (4A-4G) of the other vehicle (2).

7. Operating method according to Claim 6, wherein the 3-dimensional trajectory (111) of the other vehicle (2) which is travelling ahead is determined as a function of a lateral outline and length of the vehicle.

8. Operating method according to one of the preceding claims, wherein a type of road and a 3-dimensional trajectory (112) of the road are determined and are included in the longitudinal control of the vehicle.

9. Operating method according to one of the preceding claims, also comprising the steps of: determining at least one state (107) of the underlying surface, a coefficient of friction (108) of the underlying surface, a tyre-specific parameter of the vehicle (1) and/or a vehicle-specific parameter (106), wherein at least one of these parameters is included in the longitudinal control.

10. Operating method according to one of the preceding claims, also comprising the steps of: determining at least one load state of the vehicle, a state of the vehicle brake system and/or a state of the tyres of the vehicle (1), wherein at least one of these parameters is included in the longitudinal control.

11. Driver assistance system (100) for performing the longitudinal control of a vehicle (1) relating to another vehicle (2), preferably for controlling the velocity and/or inter-vehicle distance, in particular for carrying out the operating method according to one of the preceding claims, wherein the driver assistance system (100) comprises the following:

   - a supply device (109) which is designed to determine a vehicle class of another vehicle (2) which is travelling ahead, wherein a predefined number of vehicle classes is provided, and at least one of these classes is determined as a function of a detected inter-vehicle distance (104), a height and a width of the other vehicle (2) and is taken into account for the longitudinal control of the vehicle; and
   - at least one control device (114), which is designed to carry out the longitudinal control of the vehicle as a function of at least one parameter which can be derived from the vehicle class,

   **characterized in that** the supply device (109) is configured

   to determine a 3-dimensional trajectory (111) of the other vehicle (2) as a function of a measured inter-vehicle distance (104) and a changing angle of incidence (105) of the other vehicle (2), wherein the angle of incidence is the angle between the direction of travel of the vehicle (1) and a distance vector relating to the other vehicle (2), and
   to correct a changing width and/or height of the outline (4A-4G) of the other vehicle (2) as a function of the determined 3-dimensional trajectory (111) of the other vehicle (2), so that the outline can be evaluated without geometric distortion and its type identified in order to determine the vehicle class.

12. Utility vehicle, preferably a lorry or bus, having a driver assistance system (100) according to Claim 11.

**EP 2 840 004 B1**

## Revendications

1. Procédé de fonctionnement pour un système d'assistance au conducteur (100) destiné à la régulation longitudinale de véhicule d'un véhicule (1) par rapport à un véhicule tiers (2), de préférence destiné à la régulation de la vitesse et/ou de la distance, la régulation longitudinale de véhicule s'effectuant en fonction d'au moins un paramètre pouvant être dérivé d'une catégorie de véhicule (109) du véhicule tiers (2), un nombre prédéfini de catégories de véhicule étant prévu et au moins l'une de ces catégories étant définie en fonction d'une distance (104) détectée, d'une hauteur et d'une largeur du véhicule tiers (2) et prise en compte pour la régulation longitudinale de véhicule, **caractérisé par** les étapes suivantes :

   détermination d'une trajectoire (111) tridimensionnelle du véhicule tiers (2) en fonction d'une distance (104) mesurée et d'un angle d'incidence (105) variable du véhicule tiers (2), l'angle d'incidence étant l'angle entre le sens de déplacement du véhicule (1) et un vecteur de distance par rapport au véhicule tiers (2), et correction d'une largeur et/ou d'une hauteur variable d'une silhouette (4A-4G) du véhicule tiers (2) en fonction de la trajectoire (111) tridimensionnelle déterminée du véhicule tiers (2), de sorte que la silhouette (4A-4G) peut être interprétée sans déformation géométrique et standardisée en vue de définir la catégorie de véhicule.

2. Procédé de fonctionnement selon la revendication 1, comprenant l'étape : définition de la silhouette (4A-4G) du véhicule tiers (2) à l'aide de laquelle est effectuée la classification du véhicule tiers (2).

3. Procédé de fonctionnement selon la revendication 1, comprenant en outre les étapes suivantes :

   réception, de la part du véhicule tiers (2) ou d'une unité d'émission fixe, de paramètres spécifiques au véhicule concernant la capacité de ralentissement de freinage du véhicule tiers (2) ; et réalisation de la régulation longitudinale de véhicule en fonction des paramètres spécifiques au véhicule reçus.

4. Procédé de fonctionnement selon l'une des revendications précédentes, comprenant en outre les étapes suivantes :

   détection d'un paramètre (107, 108) actuel spécifique à la voie de circulation ; adaptation d'un paramètre préalablement connu concernant une capacité de ralentissement de freinage du véhicule (2) en fonction du paramètre (107, 108) actuel spécifique à la voie de circulation ; définition d'un paramètre concernant une capacité de ralentissement de freinage du véhicule tiers (108) en fonction de la catégorie de véhicule (109) définie du véhicule tiers (2) et du paramètre (107, 108) actuel spécifique à la voie de circulation, la régulation longitudinale de véhicule s'effectuant en fonction des paramètres concernant la capacité de ralentissement de freinage du véhicule (1) et du véhicule tiers (2).

5. Procédé de fonctionnement selon l'une des revendications précédentes, comprenant en outre :

   détermination d'une trajectoire (110) tridimensionnelle du véhicule (1), la régulation longitudinale de véhicule s'effectuant en fonction des trajectoires (110, 111) tridimensionnelles déterminées.

6. Procédé de fonctionnement selon la revendication 1, la trajectoire (111) tridimensionnelle du véhicule tiers (2) qui précède étant déterminée en fonction d'une largeur et/ou d'une hauteur variable de la silhouette arrière (4A-4G) du véhicule tiers (2).

7. Procédé de fonctionnement selon la revendication 6, la trajectoire (111) tridimensionnelle du véhicule tiers (2) qui précède étant déterminée en fonction d'une silhouette latérale et de la longueur de véhicule.

8. Procédé de fonctionnement selon l'une des revendications précédentes, un type de route et une trajectoire (112) tridimensionnelle de la route étant déterminés et intervenant dans la régulation longitudinale de véhicule.

9. Procédé de fonctionnement selon l'une des revendications précédentes, comprenant en outre les étapes suivantes : définition d'au moins un état de la voie de circulation (107), d'un coefficient de frottement de la voie de circulation (108), d'un paramètre spécifique aux pneus du véhicule (1) et/ou d'un paramètre spécifique au véhicule (106), au moins l'un de ces paramètres intervenant dans la régulation longitudinale.

10. Procédé de fonctionnement selon l'une des revendications précédentes, comprenant en outre les étapes suivantes :

définition d'au moins un état de chargement de véhicule, un état du système de freinage de véhicule et/ou état des pneus du véhicule (1), au moins l'un de ces paramètres intervenant dans la régulation longitudinale.

11. Système d'assistance au conducteur (100) destiné à la régulation longitudinale de véhicule d'un véhicule (1) par rapport à un véhicule tiers (2), de préférence destiné à la régulation de la vitesse et/ou de la distance, notamment destiné à mettre en oeuvre un procédé de fonctionnement selon l'une des revendications précédentes, le système d'assistance au conducteur (100) comprenant les éléments suivants :

- un dispositif de fourniture (109) qui est conçu pour définir une catégorie de véhicule d'un véhicule tiers (2) qui précède, un nombre prédéfini de catégories de véhicule étant prévu et au moins l'une de ces catégories étant définie en fonction d'une distance (104) détectée, d'une hauteur et d'une largeur du véhicule tiers (2) et prise en compte pour la régulation longitudinale de véhicule ; et
- au moins un dispositif de régulation (114) qui est conçu pour réaliser la régulation longitudinale de véhicule en fonction d'au moins un paramètre pouvant être dérivé de la catégorie de véhicule,

**caractérisé en ce que** le dispositif de fourniture (109) est conçu pour déterminer une trajectoire (111) tridimensionnelle du véhicule tiers (2) en fonction d'une distance (104) mesurée et d'un angle d'incidence (105) variable du véhicule tiers (2), l'angle d'incidence étant l'angle entre le sens de déplacement du véhicule (1) et un vecteur de distance par rapport au véhicule tiers (2), et

corriger une largeur et/ou une hauteur variable de la silhouette (4A-4G) du véhicule tiers (2) en fonction de la trajectoire (111) tridimensionnelle déterminée du véhicule tiers (2), de sorte que la silhouette peut être interprétée sans déformation géométrique et standardisée en vue de définir la catégorie de véhicule.

12. Véhicule utilitaire, de préférence poids-lourds ou autobus, comprenant un système d'assistance au conducteur (100) selon la revendication 11.

Fig. 1

EP 2 840 004 B1

| Sensoren & Daten |
|---|
| Raddrehzahl |
| Federungs-geschw.. |
| Aussentemp. |
| Reifentemp. |
| Achslast |
| GPS-Daten |
| Navigationsdaten |
| Lasersensorik |
| Radarsensorik |
| Neigungssensor |
| Ultraschallsensor |
| Kamerasensor |
| weitere Sensoren, Sensorgrößen |

101

100

102

103 — Geschwindigkeit — 113
104 — Abstand — 113
105 — Einfallswinkel — 113
106 — Fahrzeugparameter — 113
107 — Aktueller Fahrbahnzustand — 113
108 — Aktueller Fahrbahnreibwert — 113
109 — Fahrzeugklasse Fremdfahrzeug — 113
110 — 3D-Bahnkurve Fahrzeug — 113
111 — 3D-Bahnkurve Fremdfahrzeug — 113
112 — Typ & 3D-Bahnkurve Fahrbahn — 113

114

115

116

17

# Fig. 2

EP 2 840 004 B1

| vorausfahrendes Fremdfahrzeug | Fzg.-Klasse | 1 | 2 | 3 | 4 | 4 | 5 | 6 | 7 |
|---|---|---|---|---|---|---|---|---|---|
| | typ. Fahrzeug | Lkw-40 t/ Reisebus-hoch | Pkw | Pkw mit Caravan | SUV | Transporter | Lkw-12/ 24 t, Bus | Sportwagen | Motorrad |
| Silhouette | Höhe, von..bis [dm] | 35..40 | 14..15 | 20..26 | 16..18 | 20..31 | 22..28 | 11..14 | 13..18 |
| | Breite, von..bis [dm] | 23-25 | 16..19 | 18..25 | 18..20 | 18..20 | 22..25 | 17..20 | 6..10 |
| | Höhe : Breite, von..bis | 1,52..1,6 | 0,79..0,87 | 1,04..1,11 | 0,88..0,9 | 1,11..1,55 | 1..1,17 | 0,56..0,76 | 1,4..2,5 |
| typische Verzögerung [g] (bei typischer bzw. fahrbarer Geschwindigkeit, ABS, geeigneter Bereifung, mittlerer Zuladung, Fahrbahn gut - mitel - schlecht) | | | | | | | | | |
| Fahrbahn Reibwert-Klassen µF | 1: >0,8  (trocken) | 0,62/0,58/0,55 | 0,95/0,85/0,8 | 0,7/0,55/0,45 | 0,85/0,8/0,75 | 0,8/0,75/0,7 | 0,68/0,65/0,62 | 1,05/0,95/0,8 | 1,1/0,9/0,7 |
| | 2: >0,5..0,8 (nass, kein steh. Wasser) | 0,58/0,54/0,5 | 0,75/0,65/0,55 | 0,55/0,45/0,35 | 0,72/0,62/0,55 | 0,7/0,65/0,58 | 0,6/0,56/0,54 | 0,8/0,7/0,55 | 0,75/0,55/0,4 |
| | 3: 0,20..0,5 (steh. Wasser, griffig. Schnee) | 0,48/0,45/0,4 | 0,5/0,45/0,35 | 0,3/0,2/0,1 | 0,5/0,4/0,3 | 0,5/0,48/0,42 | 0,49/0,47/0,42 | 0,4/0,3/0,2 | 0,35/0,22/0,12 |
| | 4: < 0,20  (glatter schnee, Eis) | 0,20/0,19/0,18 | 0,2/0,18/0,16 | --- | 0,2/0,18/0,14 | 0,2/0,2/0,19 | 0,2/0,19/0,18 | 0,11/0,08/0,06 | --- |
| Fahrbahngüte: Ebenheit, Bodenwellen, Ausbesserungen | gut | x | x | | | | | x | x |
| | mittel | | | x | | x | x | | |
| | schlecht | | | | x | | | | |
| Fzg.-Geschwindigkeit  [km/h] | | < 95/125 | >130 | <95 | >130 | <95 | <95 | > 130 | > 130 |
| folgendes Fahrzeug (Beispiele) | | Pkw | Sportwagen | Transporter | Pkw | Lkw-40 t | Pkw | Lkw-40 t | Bus |
| Beispiele (als mögliche Ist-Zustände und angenommener Fahrbahngüten, siehe "x") | | | | | | | | | |
| Reifentyp | Sommer, Winter, etc | Ganzjahres | S=Sommer, W=Winter | S=Sommer, W=Winter | S=Sommer, W=Winter | S=Sommer, W=Winter | S=Sommer, W=Winter | Ganzjahres | S=Sommer, W=Winter |
| Profilzustand | in Prozent vom Neuzustand | 50 | S=75, W=40 | S=30, W=90 | S=35, W=80 | S=80, W=80 | S=90, W=80 | 50 | S=80, W=80 |
| Beladung | in Prozent oder Personen | 4 Personen | 2 Personen | 1 Person | 3 Personen | 100% | 100% | 100% | 70% |
| Zustand Bremsanlage | Art (Scheibe/ Trommel), Temperatur, Beläge -> Faktor 0,6...1 | 1 | 1 | 1 | 1 | 1 | 1 | 0,85 | 1 |
| mögliche Verzögerung [g] | für µF_1 | 0,92 | S=1,05 | S=0,78 | S=0,69 | S=0,58 | S=0,74 | 0,51 | S=0,68 |
| | für µF_2 | 0,7 | S=0,8 | S=0,64 | S=0,54 | S=0,54 | S=0,58 | 0,44 | S=0,6 |
| | für µF_3 | 0,46 | S=0,39 | W=0,47 | W=0,35 | W=0,45 | W=0,36 | 0,34 | W=0,49 |
| | für µF_4 | 0,2 | W=0,09 | W=0,2 | W=0,16 | W=0,19 | W=0,17 | 0,1 | --- |

200

Fig. 3

# Fig. 4

| | |
|---|---|
| Erfasse Fremdfahrzeug | S400 |
| ↓ | |
| Kürzester Abstand | S401 |
| ↓ | |
| Fahrzeugklasse | S402 |
| ↓ | |
| Einfallswinkel | S403 |
| ↓ | |
| eigene Geschwindigkeit | S404 |
| ↓ | |
| 3D-Bahnkurve eigenes Fahrzeug | S405 |
| ↓ | |
| Typ & Bahnkurve Strasse | S406 |
| ↓ | |
| Fahrbahnzustand | S407 |
| ↓ | |
| Fahrbahnreibwertklasse | S408 |
| ↓ | |
| eigene Bremsverzögerung | S409 |
| ↓ | |
| Bremsverzögerung Fremdfahrzeug | S410 |
| ↓ | |
| Berechnen & Regeln Sicherheitsabstand | S411 |

## Fig. 5A

## Fig. 5B

# Fig. 6

Erfasse Fremdfahrzeug — S600

Kürzester Abstand — S601

Fahrzeugklasse — S602

Einfallswinkel — S603

eigene Geschwindigkeit — S604

3D-Bahnkurve Fahrzeug — S605

Typ & Bahnkurve Strasse — S606

Fahrbahnzustand — S607

Fahrbahnreibwertklasse — S608

3D-Bahnkurve Fremdfahrzeug — S609

Nein — Kollision ? — Ja — S610

# Fig. 6

Ausgabe Warnsignal — S611

Start Timer — S612

Reaktion Fahrer — S613

JA     NEIN

S614 — Kein Reglereingriff

Unterschreiten Mindestabstand? — S615

Bremssteuerung — S616

Erkenne Fahrzeugklasse — S617

Sicherheitsabstand — S618

Ende Reglereingriff — S619

Fig. 7A

Fig. 7B

Fig. 8

| Ermittlung Passgefälle | S800 |
| Regelung auf Passabfahrt | S801 |
| Erfassung Ende Gefälle | S802 |
| Regelung auf neuen Sicherheitsabstand | S803 |
| Regelung auf neuen Sicherheitsabstand in Ebene | S804 |

Fig. 9

**EP 2 840 004 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010028637 A1
- US 20100256835 A1
- DE 102011108110 A1